# EUROPEAN PATENT APPLICATION

(11) **EP 4 498 744 A1**
(43) Date of publication of application: **29.01.2025**
(21) Application number: 23775226.6
(22) Date of filing: 16.03.2023
(51) Int. Cl.: H04W 72/04, H04W 72/53, H04W 84/12, H04L 5/00, H04L 1/00, H04L 27/26

(54) **METHOD AND DEVICE FOR RECEIVING PPDU BY COMBINING RU OR MRU IN PARTICULAR CHANNEL WITH RU OR MRU IN NEIGHBORING 20 MHZ CHANNEL IN WIRELESS LAN SYSTEM**

(30) Priority: 23.03.2022 KR 20220036175
(71) Applicant: LG Electronics Inc., Yeongdeungpo-gu Seoul 07336 (KR)
(72) Inventor: PARK, Eunsung, Seoul 06772 (KR); CHUN, Jinyoung, Seoul 06772 (KR); CHOI, Jinsoo, Seoul 06772 (KR); LIM, Dongguk, Seoul 06772 (KR); JUNG, Insik, Seoul 06772 (KR)
(74) Representative: Mooser, Sebastian Thomas
(86) International application number: PCT/KR2023/003523
(87) International publication number: WO 2023/182729

(57) **Abstract**

Proposed are a method and a device for receiving a PPDU by combining an RU or an MRU in a particular channel with an RU or an MRU in a neighboring 20 MHz channel in a wireless LAN system. Specifically, a reception STA receives a PPDU from a transmission STA. The reception STA decodes the PPDU to obtain control information. The reception STA decodes a data field of the PPDU on the basis of the control information. The control information comprises first or second information for an RU or an MRU in the bandwidth of the PPDU. The first information comprises first allocation information for a third MRU obtained by aggregating a first RU or a first MRU in a first channel with a second RU or a second MRU in a second channel. The first RU or the first MRU is a 242 tone RU, 106 tone RU, or a (106+26) tone MRU located on the boundary of the first channel which is adjacent to the second channel.

## Description

### TECHNICAL FIELD

The present specification relates to a technique for receiving a PPDU based on control information related to an RU or MRU in a wireless LAN system, and more particularly, to a method and apparatus for configuring a new MRU by combining an RU or MRU within a specific channel and an RU or MRU within an adjacent 20MHz channel.

### BACKGROUND ART

A wireless local area network (WLAN) has been improved in various ways. For example, the IEEE 802.11ax standard proposed an improved communication environment using orthogonal frequency division multiple access (OFDMA) and downlink multi-user multiple input multiple output (DL MU MIMO) techniques.

The present specification proposes a technical feature that can be utilized in a new communication standard. For example, the new communication standard may be an extreme high throughput (EHT) standard which is currently being discussed. The EHT standard may use an increased bandwidth, an enhanced PHY layer protocol data unit (PPDU) structure, an enhanced sequence, a hybrid automatic repeat request (HARQ) scheme, or the like, which is newly proposed. The EHT standard may be called the IEEE 802.11be standard.

In a new WLAN standard, an increased number of spatial streams may be used. In this case, in order to properly use the increased number of spatial streams, a signaling technique in the WLAN system may need to be improved.

### DISCLOSURE

### TECHNICAL PROBLEM

The present specification proposes a method and apparatus for receiving a PPDU by combining an RU or MRU within a specific channel and an RU or MRU within an adjacent 20MHz channel in a wireless LAN system.

### TECHNICAL SOLUTION

An example of the present specification proposes a method for receiving a PPDU by combining an RU or MRU within a specific channel and an RU or MRU within an adjacent 20MHz channel.

The present embodiment may be performed in a network environment in which a next generation WLAN system (IEEE 802.11be or EHT WLAN system) is supported. The next generation wireless LAN system is a WLAN system that is enhanced from an 802.11ax system and may, therefore, satisfy backward compatibility with the 802.11ax system.

The present embodiment is performed in a transmitting STA, and the transmitting STA may correspond to an access point (AP) or a station (STA). The receiving STA of the present embodiment may correspond to an STA or an AP.

This embodiment proposes a method of configuring an MRU that can use a channel more efficiently based on a combination of an RU or MRU within a specific channel and an RU or MRU within an adjacent 20MHz channel.

A receiving station (STA) receives a Physical Protocol Data Unit (PPDU) from a transmitting STA.

The receiving STA obtains control information by decoding the PPDU.

The receiving STA decodes a data field of the PPDU based on the control information.

The control information includes first or second information on a Resource Unit (RU) or a Multi-Resource Unit (MRU) within a bandwidth of the PPDU.

The first information includes first allocation information on a third MRU that is an aggregate of a first RU or a first MRU within a first channel and a second RU or a second MRU within a second channel. The first and second channels are adjacent 20 MHz channels.

The first RU or first MRU is a 242-tone RU, a 106-tone RU or a 106+26-tone MRU located at a boundary of the first channel adjacent to the second channel. The second RU or second MRU is a 106-tone RU or a 106+26-tone MRU located at a boundary of the second channel adjacent to the first channel.

The third MRU may be aggregated only within a 40MHz channel regardless of the bandwidth of the PPDU. For example, assuming that the first channel is a first 20MHz subchannel having a low frequency and the second channel is a second 20MHz subchannel having a high frequency, since the first and second channels are adjacent to each other, the third MRU may be obtained as a combination of RUs or MRUs within the first and second channels. That is, the third MRU may be aggregated centered on a boundary where the first channel and the second channel are adjacent.

According to the above-described embodiment, the third MRU may include a 242+106-tone MRU, a 242+106+26-tone MRU, a 106+106-tone MRU, a 106+106+26-tone MRU, a 106+26+106-tone MRU or a 106+26+106+26-tone MRU.

### ADVANTAGEOUS EFFECTS

According to the embodiment proposed in this specification, the utilization of a channel can be improved by using a previously unused channel (RU or MRU). As a result, the effect of improving the overall throughput and efficiency of the system can be expected.

### BRIEF DESCRIPTION OF THE DRAWINGS

FIG. 1 shows an example of a transmitting apparatus and/or receiving apparatus of the present specification.
FIG. 2 is a conceptual view illustrating the structure of a wireless local area network (WLAN).
FIG. 3 illustrates a general link setup process.
FIG. 4 illustrates an example of a PPDU used in an IEEE standard.
FIG. 5 illustrates a layout of resource units (RUs) used in a band of 20 MHz.
FIG. 6 illustrates a layout of RUs used in a band of 40 MHz.
FIG. 7 illustrates a layout of RUs used in a band of 80 MHz.
FIG. 8 illustrates a structure of an HE-SIG-B field.
FIG. 9 illustrates an example in which a plurality of user STAs are allocated to the same RU through a MU-MIMO scheme.
FIG. 10 illustrates an example of a PPDU used in the present specification.
FIG. 11 illustrates an example of a modified transmission device and/or receiving device of the present specification.
FIG. 12 is the 80 MHz tone plan defined in 802.11be.
FIG. 13 shows a combination of a 106-tone RU in a specific 20 MHz channel and a 106+26-tone MRU in an adjacent 20 MHz channel in the 40 MHz band.
FIG. 14 shows a combination of a 106-tone RU in a specific 20 MHz channel and a 106+26-tone MRU in an adjacent 20 MHz channel in the 80 MHz band.
FIG.15 shows a combination of 52+26-tone MRUs in a 20 MHz subchannel in the 40 MHz band.
FIG. 16 shows a combination of 52+26-tone MRUs in each 80 MHz subblock in the 80 MHz, 160 MHz or 320 MHz band.
FIG. 17 shows a combination of a 484-tone RU in an 80 MHz band and a 106+26-tone MRU in an adjacent 20 MHz subchannel.
FIG. 18 is a procedure flowchart showing the operation of a transmitting device according to the present embodiment.
FIG. 19 is a procedure flowchart showing the operation of a receiving device according to the present embodiment.
FIG. 20 is a flowchart showing a procedure in which the transmitting STA generated the PPDU based the control information related to the RU or MRU according to the present embodiment.
FIG. 21 is a flowchart showing a procedure in which the receiving STA receives the PPDU based the control information related to the RU or MRU according to the present embodiment.

### MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (EHT-signal)", it may denote that "EHT-signal" is proposed as an example of the "control information". In other words, the "control information" of the present specification is not limited to "EHT-signal", and "EHT-signal" may be proposed as an example of the "control information". In addition, when indicated as "control information (i.e., EHT-signal)", it may also mean that "EHT-signal" is proposed as an example of the "control information".

Technical features described individually in one figure in the present specification may be individually implemented, or may be simultaneously implemented.

The following example of the present specification may be applied to various wireless communication systems. For example, the following example of the present specification may be applied to a wireless local area network (WLAN) system. For example, the present specification may be applied to the IEEE 802.11a/g/n/ac standard or the IEEE 802.11ax standard. In addition, the present specification may also be applied to the newly proposed EHT standard or IEEE 802.11be standard. In addition, the example of the present specification may also be applied to a new WLAN standard enhanced from the EHT standard or the IEEE 802.11be standard. In addition, the example of the present specification may be applied to a mobile communication system. For example, it may be applied to a mobile communication system based on long term evolution (LTE) depending on a 3^{rd} generation partnership project (3GPP) standard and based on evolution of the LTE. In addition, the example of the present specification may be applied to a communication system of a 5G NR standard based on the 3GPP standard.

Hereinafter, in order to describe a technical feature of the present specification, a technical feature applicable to the present specification will be described.

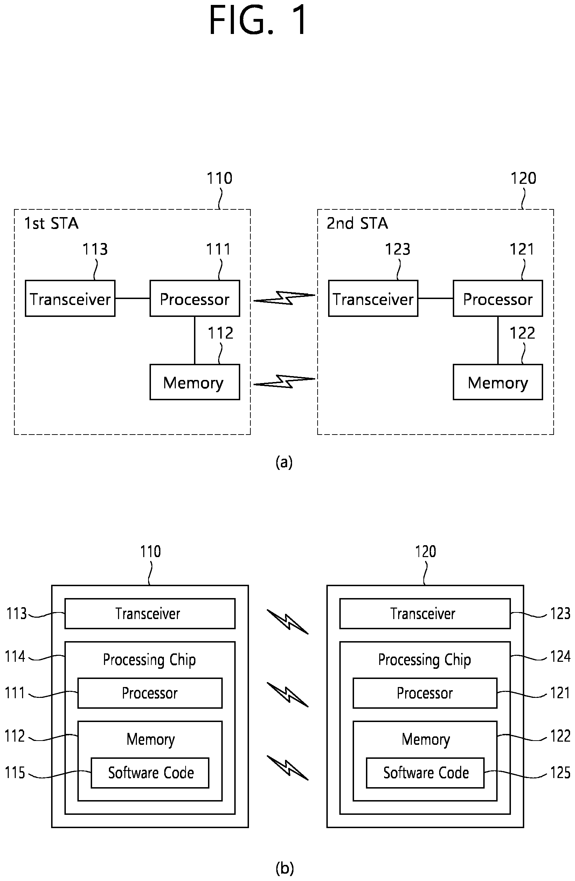

FIG. 1 shows an example of a transmitting apparatus and/or receiving apparatus of the present specification.

In the example of FIG. 1, various technical features described below may be performed. FIG. 1 relates to at least one station (STA). For example, STAs 110 and 120 of the present specification may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present specification may also be called in various terms such as a network, a base station, a node-B, an access point (AP), a repeater, a router, a relay, or the like. The STAs 110 and 120 of the present specification may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present specification may serve as the AP and/or the non-AP.

The STAs 110 and 120 of the present specification may support various communication standards together in addition to the IEEE 802.11 standard. For example, a communication standard (e.g., LTE, LTE-A, 5G NR standard) or the like based on the 3GPP standard may be supported. In addition, the STA of the present specification may be implemented as various devices such as a mobile phone, a vehicle, a personal computer, or the like. In addition, the STA of the present specification may support communication for various communication services such as voice calls, video calls, data communication, and self-driving (autonomous-driving), or the like.

The STAs 110 and 120 of the present specification may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the specification described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the specification described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the specification described below, a device called a (transmitting/receiving) STA, a first STA, a second STA, a STA1, a STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present specification will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present specification may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present specification, an uplink may imply a link for communication from a non-AP STA to an SP STA, and an uplink PPDU/packet/signal or the like may be transmitted through the uplink. In addition, in the present specification, a downlink may imply a link for communication from the AP STA to the non-AP STA, and a downlink PPDU/packet/signal or the like may be transmitted through the downlink.

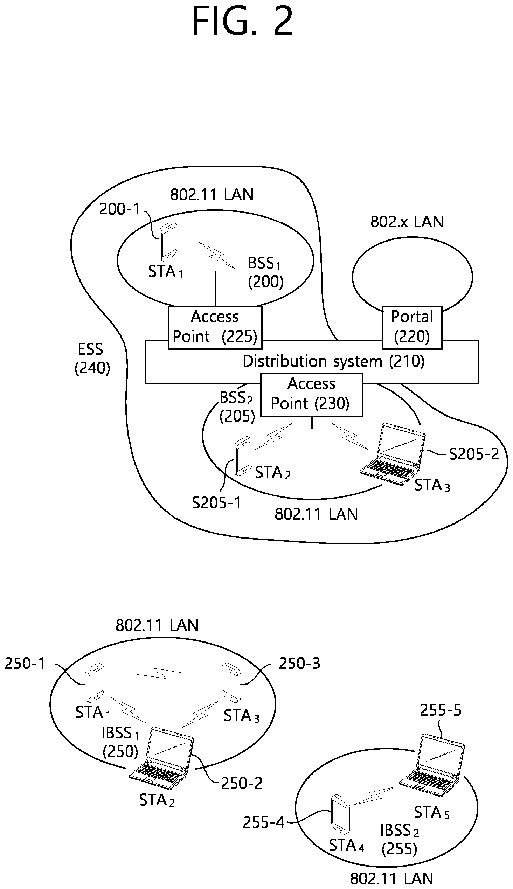

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and a STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, APs providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

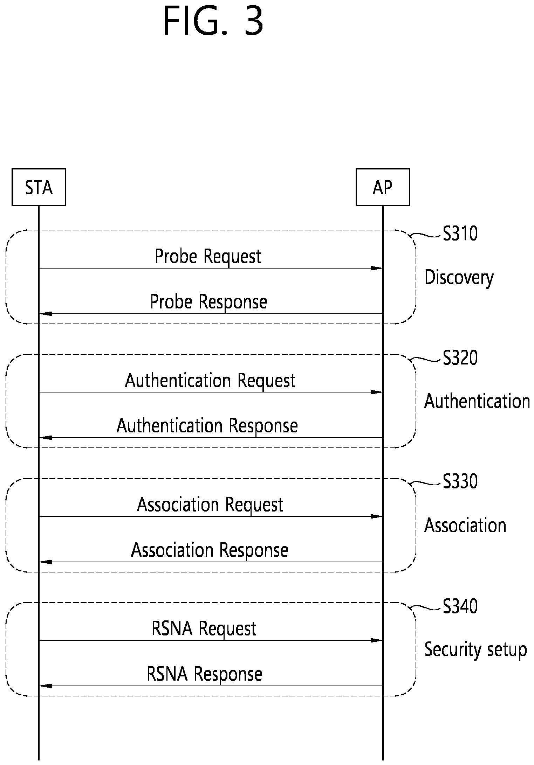

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information related to a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information related to an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information related to various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information related to various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

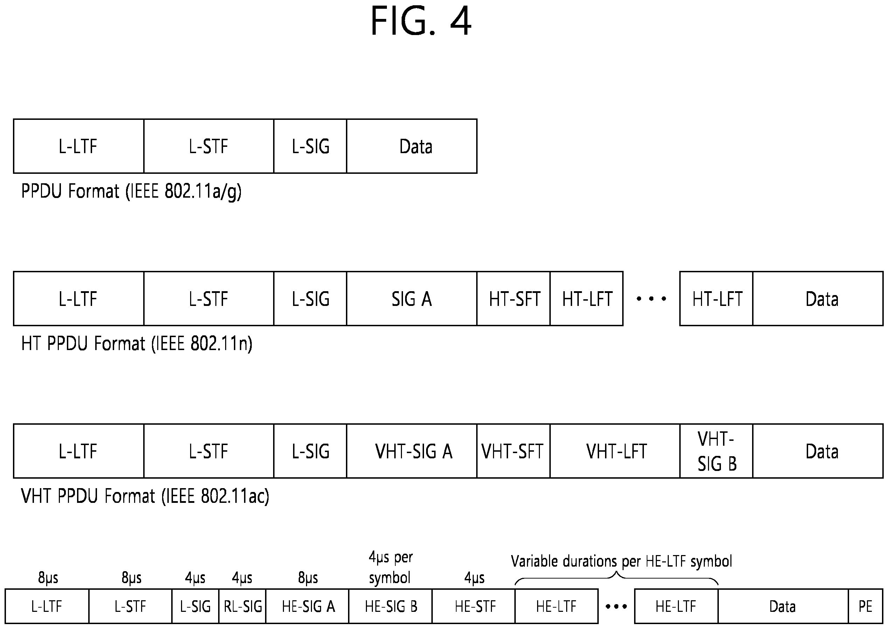

FIG. 4 illustrates an example of a PPDU used in an IEEE standard.

As illustrated, various types of PHY protocol data units (PPDUs) are used in IEEE a/g/n/ac standards. Specifically, an LTF and a STF include a training signal, a SIG-A and a SIG-B include control information for a receiving STA, and a data field includes user data corresponding to a PSDU (MAC PDU/aggregated MAC PDU).

FIG. 4 also includes an example of an HE PPDU according to IEEE 802.11ax. The HE PPDU according to FIG. 4 is an illustrative PPDU for multiple users. An HE-SIG-B may be included only in a PPDU for multiple users, and an HE-SIG-B may be omitted in a PPDU for a single user.

As illustrated in FIG. 4, the HE-PPDU for multiple users (MUs) may include a legacy-short training field (L-STF), a legacy-long training field (L-LTF), a legacy-signal (L-SIG), a high efficiency-signal A (HE-SIG A), a high efficiency-signal-B (HE-SIG B), a high efficiency-short training field (HE-STF), a high efficiency-long training field (HE-LTF), a data field (alternatively, an MAC payload), and a packet extension (PE) field. The respective fields may be transmitted for illustrated time periods (i.e., 4 or 8 µs).

Hereinafter, a resource unit (RU) used for a PPDU is described. An RU may include a plurality of subcarriers (or tones). An RU may be used to transmit a signal to a plurality of STAs according to OFDMA. Further, an RU may also be defined to transmit a signal to one STA. An RU may be used for an STF, an LTF, a data field, or the like.

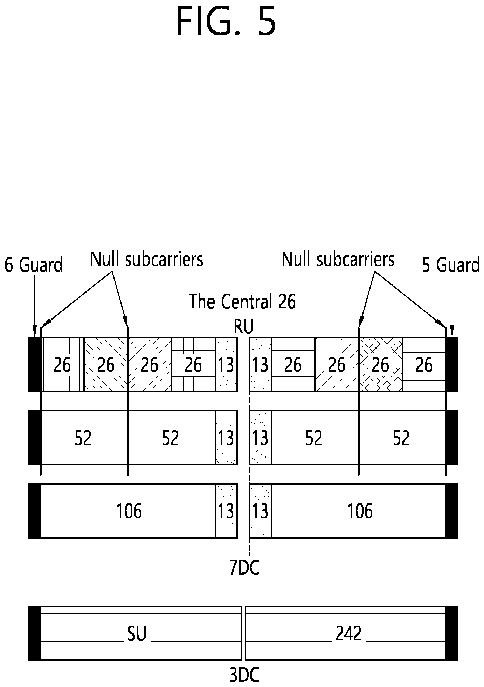

FIG. 5 illustrates a layout of resource units (RUs) used in a band of 20 MHz.

As illustrated in FIG. 5, resource units (RUs) corresponding to different numbers of tones (i.e., subcarriers) may be used to form some fields of an HE-PPDU. For example, resources may be allocated in illustrated RUs for an HE-STF, an HE-LTF, and a data field.

As illustrated in the uppermost part of FIG. 5, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

The layout of the RUs in FIG. 5 may be used not only for a multiple users (MUs) but also for a single user (SU), in which case one 242-unit may be used and three DC tones may be inserted as illustrated in the lowermost part of FIG. 5.

Although FIG. 5 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones).

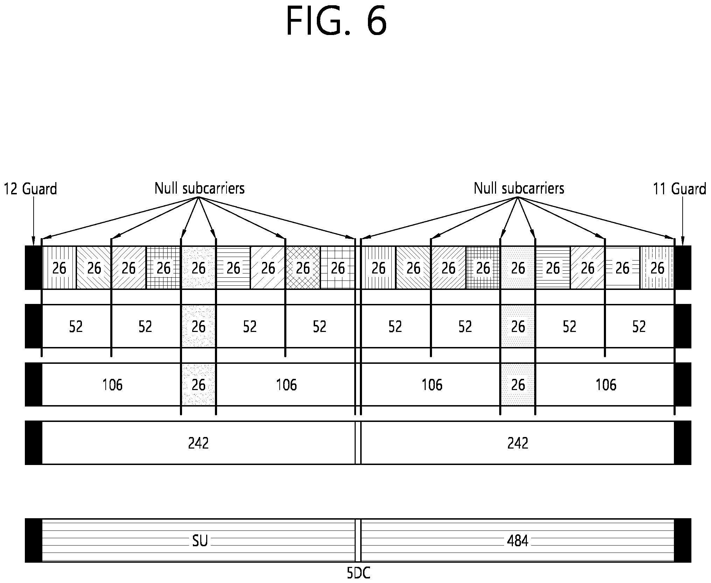

FIG. 6 illustrates a layout of RUs used in a band of 40 MHz.

Similarly to FIG. 5 in which RUs having various sizes are used, a 26-RU, a 52-RU, a 106-RU, a 242-RU, a 484-RU, and the like may be used in an example of FIG. 6. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 6, when the layout of the RUs is used for a single user, a 484-RU may be used. The specific number of RUs may be changed similarly to FIG. 5.

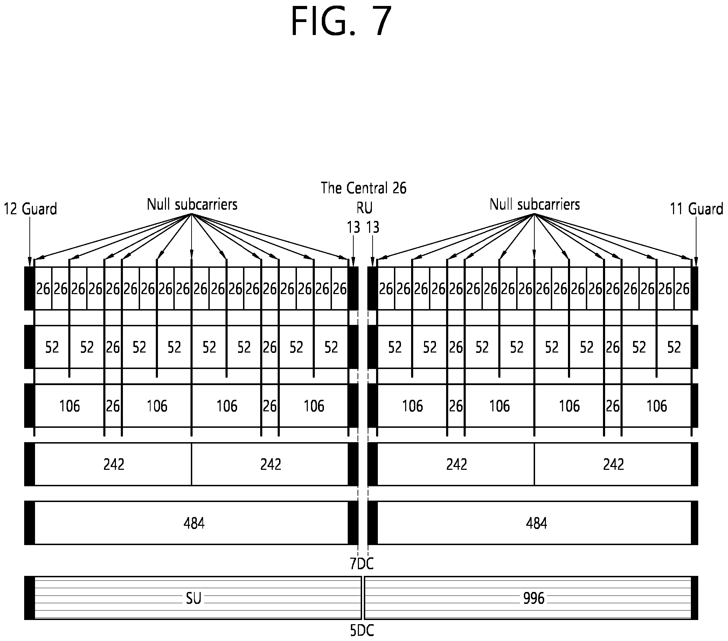

FIG. 7 illustrates a layout of RUs used in a band of 80 MHz.

Similarly to FIG. 5 and FIG. 6 in which RUs having various sizes are used, a 26-RU, a 52-RU, a 106-RU, a 242-RU, a 484-RU, a 996-RU, and the like may be used in an example of FIG. 7. Further, seven DC tones may be inserted in the center frequency, 12 tones may be used for a guard band in the leftmost band of the 80 MHz band, and 11 tones may be used for a guard band in the rightmost band of the 80 MHz band. In addition, a 26-RU corresponding to 13 tones on each of the left and right sides of the DC band may be used.

As illustrated in FIG. 7, when the layout of the RUs is used for a single user, a 996-RU may be used, in which case five DC tones may be inserted.

The RU described in the present specification may be used in uplink (UL) communication and downlink (DL) communication. For example, when UL-MU communication which is solicited by a trigger frame is performed, a transmitting STA (e.g., an AP) may allocate a first RU (e.g., 26/52/106/242-RU, etc.) to a first STA through the trigger frame, and may allocate a second RU (e.g., 26/52/106/242-RU, etc.) to a second STA. Thereafter, the first STA may transmit a first trigger-based PPDU based on the first RU, and the second STA may transmit a second trigger-based PPDU based on the second RU. The first/second trigger-based PPDU is transmitted to the AP at the same (or overlapped) time period.

For example, when a DL MU PPDU is configured, the transmitting STA (e.g., AP) may allocate the first RU (e.g., 26/52/106/242-RU. etc.) to the first STA, and may allocate the second RU (e.g., 26/52/106/242-RU, etc.) to the second STA. That is, the transmitting STA (e.g., AP) may transmit HE-STF, HE-LTF, and Data fields for the first STA through the first RU in one MU PPDU, and may transmit HE-STF, HE-LTF, and Data fields for the second STA through the second RU.

Information related to a layout of the RU may be signaled through HE-SIG-B.

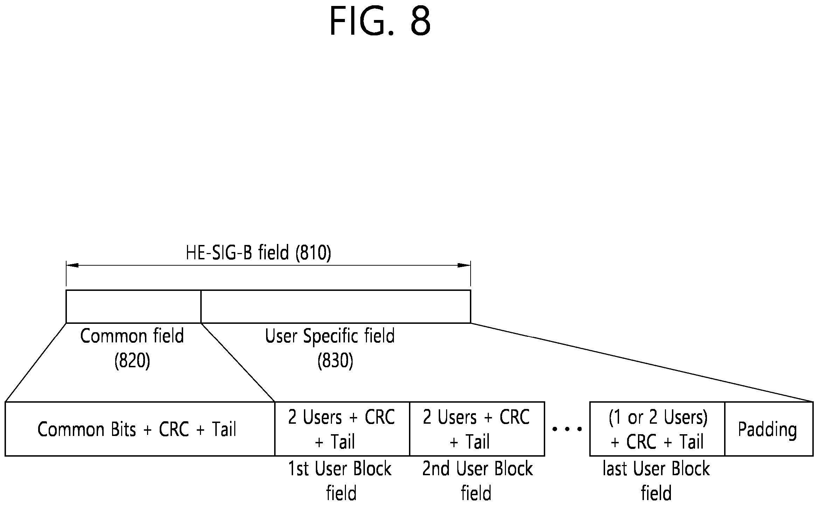

FIG. 8 illustrates a structure of an HE-SIG-B field.

As illustrated, an HE-SIG-B field 810 includes a common field 820 and a user-specific field 830. The common field 820 may include information commonly applied to all users (i.e., user STAs) which receive SIG-B. The user-specific field 830 may be called a user-specific control field. When the SIG-B is transferred to a plurality of users, the user-specific field 830 may be applied only any one of the plurality of users.

As illustrated in FIG. 8, the common field 820 and the user-specific field 830 may be separately encoded.

The common field 820 may include RU allocation information of N*8 bits. For example, the RU allocation information may include information related to a location of an RU. For example, when a 20 MHz channel is used as shown in FIG. 5, the RU allocation information may include information related to a specific frequency band to which a specific RU (26-RU/52-RU/106-RU) is arranged.

An example of a case in which the RU allocation information consists of 8 bits is as follows.

**[Table 1]**

| **RU Allocation subfield (B7 B6 B5 B4 B3 B2 B1 B0)** | **#1** | **#2** | **#3** | **#4** | **#5** | **#6** | **#7** | **#8** | **#9** | **Number of entries** |
|---|---|---|---|---|---|---|---|---|---|---|
| 00000000 | 26 | 26 | 26 | 26 | 26 | 26 | 26 | 26 | 26 | 1 |
| 00000001 | 26 | 26 | 26 | 26 | 26 | 26 | 26 | 52 | | 1 |
| 00000010 | 26 | 26 | 26 | 26 | 26 | 52 | | 26 | 26 | 1 |
| 00000011 | 26 | 26 | 26 | 26 | 26 | 52 | | 52 | | 1 |
| 00000100 | 26 | 26 | 52 | | 26 | 26 | 26 | 26 | 26 | 1 |
| 00000101 | 26 | 26 | 52 | | 26 | 26 | 26 | 52 | | 1 |
| 00000110 | 26 | 26 | 52 | | 26 | 52 | | 26 | 26 | 1 |
| 00000111 | 26 | 26 | 52 | | 26 | 52 | | 52 | | 1 |
| 00001000 | 52 | | 26 | 26 | 26 | 26 | 26 | 26 | 26 | 1 |
| 00001001 | 52 | | 26 | 26 | 26 | 26 | 26 | 52 | | 1 |
| 00001010 | 52 | | 26 | 26 | 26 | 52 | | 26 | 26 | 1 |

As shown the example of FIG. 5, up to nine 26-RUs may be allocated to the 20 MHz channel. When the RU allocation information of the common field 820 is set to "00000000" as shown in Table 1, the nine 26-RUs may be allocated to a corresponding channel (i.e., 20 MHz). In addition, when the RU allocation information of the common field 820 is set to "00000001" as shown in Table 1, seven 26-RUs and one 52-RU are arranged in a corresponding channel. That is, in the example of FIG. 5, the 52-RU may be allocated to the rightmost side, and the seven 26-RUs may be allocated to the left thereof.

The example of Table 1 shows only some of RU locations capable of displaying the RU allocation information.

For example, the RU allocation information may include an example of Table 2 below.

**[Table 2]**

| 8 bit indices (B7 B6 B5 B4 B3 B2 B1 B0) | #1 | #2 | #3 | #4 | #5 | #6 | #7 | #8 | #9 | Numb er of entrie s |
|---|---|---|---|---|---|---|---|---|---|---|
| 01000y2y1y0 | 106 | | | | 26 | 26 | 26 | 26 | 26 | 8 |
| 01001y2y1y0 | 106 | | | | 26 | 26 | 26 | 52 | | 8 |

"01000y2y1y0" relates to an example in which a 106-RU is allocated to the leftmost side of the 20 MHz channel, and five 26-RUs are allocated to the right side thereof. In this case, a plurality of STAs (e.g., user-STAs) may be allocated to the 106-RU, based on a MU-MIMO scheme. Specifically, up to 8 STAs (e.g., user-STAs) may be allocated to the 106-RU, and the number of STAs (e.g., user-STAs) allocated to the 106-RU is determined based on 3-bit information (y2yly0). For example, when the 3-bit information (y2yly0) is set to N, the number of STAs (e.g., user-STAs) allocated to the 106-RU based on the MU-MIMO scheme may be N+1.

In general, a plurality of STAs (e.g., user STAs) different from each other may be allocated to a plurality of RUs. However, the plurality of STAs (e.g., user STAs) may be allocated to one or more RUs having at least a specific size (e.g., 106 subcarriers), based on the MU-MIMO scheme.

As shown in FIG. 8, the user-specific field 830 may include a plurality of user fields. As described above, the number of STAs (e.g., user STAs) allocated to a specific channel may be determined based on the RU allocation information of the common field 820. For example, when the RU allocation information of the common field 820 is "00000000", one user STA may be allocated to each of nine 26-RUs (e.g., nine user STAs may be allocated). That is, up to 9 user STAs may be allocated to a specific channel through an OFDMA scheme. In other words, up to 9 user STAs may be allocated to a specific channel through a non-MU-MIMO scheme.

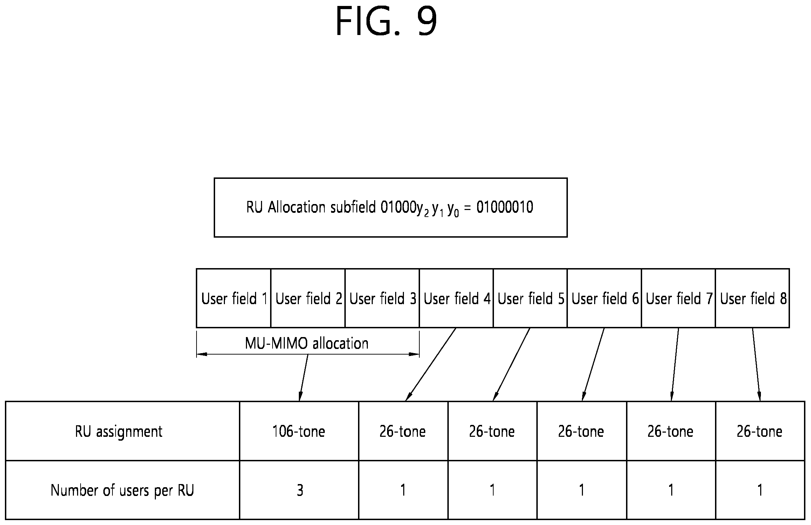

For example, when RU allocation is set to "01000y2y1y0", a plurality of STAs may be allocated to the 106-RU arranged at the leftmost side through the MU-MIMO scheme, and five user STAs may be allocated to five 26-RUs arranged to the right side thereof through the non-MU MIMO scheme. This case is specified through an example of FIG. 9.

FIG. 9 illustrates an example in which a plurality of user STAs are allocated to the same RU through a MU-MIMO scheme.

For example, when RU allocation is set to "01000010" as shown in FIG. 9, a 106-RU may be allocated to the leftmost side of a specific channel, and five 26-RUs may be allocated to the right side thereof. In addition, three user STAs may be allocated to the 106-RU through the MU-MIMO scheme. As a result, since eight user STAs are allocated, the user-specific field 830 of HE-SIG-B may include eight user fields.

The eight user fields may be expressed in the order shown in FIG. 9. In addition, as shown in FIG. 8, two user fields may be implemented with one user block field.

The user fields shown in FIG. 8 and FIG. 9 may be configured based on two formats. That is, a user field related to a MU-MIMO scheme may be configured in a first format, and a user field related to a non-MIMO scheme may be configured in a second format. Referring to the example of FIG. 9, a user field 1 to a user field 3 may be based on the first format, and a user field 4 to a user field 8 may be based on the second format. The first format or the second format may include bit information of the same length (e.g., 21 bits).

Each user field may have the same size (e.g., 21 bits). For example, the user field of the first format (the first of the MU-MIMO scheme) may be configured as follows.

For example, a first bit (i.e., B0-B10) in the user field (i.e., 21 bits) may include identification information (e.g., STA-ID, partial AID, etc.) of a user STA to which a corresponding user field is allocated. In addition, a second bit (i.e., B11-B14) in the user field (i.e., 21 bits) may include information related to a spatial configuration.

In addition, a third bit (i.e., B15-18) in the user field (i.e., 21 bits) may include modulation and coding scheme (MCS) information. The MCS information may be applied to a data field in a PPDU including corresponding SIG-B.

An MCS, MCS information, an MCS index, an MCS field, or the like used in the present specification may be indicated by an index value. For example, the MCS information may be indicated by an index 0 to an index 11. The MCS information may include information related to a constellation modulation type (e.g., BPSK, QPSK, 16-QAM, 64-QAM, 256-QAM, 1024-QAM, etc.) and information related to a coding rate (e.g., 1/2, 2/3, 3/4, 5/6e, etc.). Information related to a channel coding type (e.g., LCC or LDPC) may be excluded in the MCS information.

In addition, a fourth bit (i.e., B19) in the user field (i.e., 21 bits) may be a reserved field.

In addition, a fifth bit (i.e., B20) in the user field (i.e., 21 bits) may include information related to a coding type (e.g., BCC or LDPC). That is, the fifth bit (i.e., B20) may include information related to a type (e.g., BCC or LDPC) of channel coding applied to the data field in the PPDU including the corresponding SIG-B.

The aforementioned example relates to the user field of the first format (the format of the MU-MIMO scheme). An example of the user field of the second format (the format of the non-MU-MIMO scheme) is as follows.

A first bit (e.g., B0-B10) in the user field of the second format may include identification information of a user STA. In addition, a second bit (e.g., B11-B13) in the user field of the second format may include information related to the number of spatial streams applied to a corresponding RU. In addition, a third bit (e.g., B14) in the user field of the second format may include information related to whether a beamforming steering matrix is applied. A fourth bit (e.g., B15-B18) in the user field of the second format may include modulation and coding scheme (MCS) information. In addition, a fifth bit (e.g., B19) in the user field of the second format may include information related to whether dual carrier modulation (DCM) is applied. In addition, a sixth bit (i.e., B20) in the user field of the second format may include information related to a coding type (e.g., BCC or LDPC).

Hereinafter, a PPDU transmitted/received in a STA of the present specification will be described.

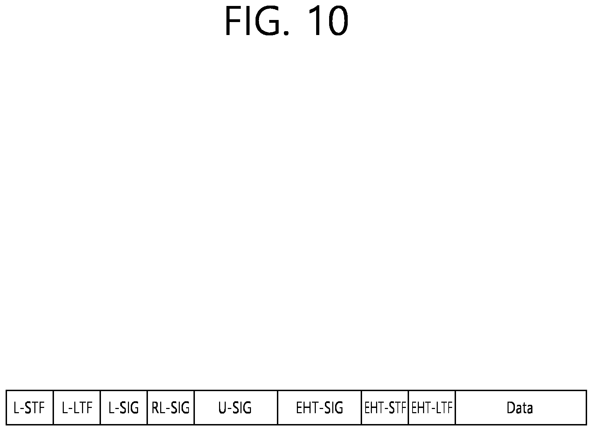

FIG. 10 illustrates an example of a PPDU used in the present specification.

The PPDU of FIG. 10 may be called in various terms such as an EHT PPDU, a TX PPDU, an RX PPDU, a first type or N-th type PPDU, or the like. For example, in the present specification, the PPDU or the EHT PPDU may be called in various terms such as a TX PPDU, a RX PPDU, a first type or N-th type PPDU, or the like. In addition, the EHT PPDU may be used in an EHT system and/or a new WLAN system enhanced from the EHT system.

The PPDU of FIG. 10 may indicate the entirety or part of a PPDU type used in the EHT system. For example, the example of FIG. 10 may be used for both of a single-user (SU) mode and a multi-user (MU) mode. In other words, the PPDU of FIG. 10 may be a PPDU for one receiving STA or a plurality of receiving STAs. When the PPDU of FIG. 10 is used for a trigger-based (TB) mode, the EHT-SIG of FIG. 10 may be omitted. In other words, an STA which has received a trigger frame for uplink-MU (UL-MU) may transmit the PPDU in which the EHT-SIG is omitted in the example of FIG. 10.

In FIG. 10, an L-STF to an EHT-LTF may be called a preamble or a physical preamble, and may be generated/transmitted/received/obtained/decoded in a physical layer.

A subcarrier spacing of the L-STF, L-LTF, L-SIG, RL-SIG, U-SIG, and EHT-SIG fields of FIG. 10 may be determined as 312.5 kHz, and a subcarrier spacing of the EHT-STF, EHT-LTF, and Data fields may be determined as 78.125 kHz. That is, a tone index (or subcarrier index) of the L-STF, L-LTF, L-SIG, RL-SIG, U-SIG, and EHT-SIG fields may be expressed in unit of 312.5 kHz, and a tone index (or subcarrier index) of the EHT-STF, EHT-LTF, and Data fields may be expressed in unit of 78.125 kHz.

In the PPDU of FIG. 10, the L-LTE and the L-STF may be the same as those in the conventional fields.

The L-SIG field of FIG. 10 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-HT, HT, VHT PPDU or an EHT PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI or the EHT PPDU, the value of the length field may be determined as a multiple of 3, and for the HE PPDU, the value of the length field may be determined as "a multiple of 3"+1 or "a multiple of 3"+2.

For example, the transmitting STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation on a frequency domain corresponding to {-28, -27, +27, +28}.

The transmitting STA may generate an RL-SIG generated in the same manner as the L-SIG. BPSK modulation may be applied to the RL-SIG. The receiving STA may know that the RX PPDU is the HE PPDU or the EHT PPDU, based on the presence of the RL-SIG.

A universal SIG (U-SIG) may be inserted after the RL-SIG of FIG. 10. The U-SIB may be called in various terms such as a first SIG field, a first SIG, a first type SIG, a control signal, a control signal field, a first (type) control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4 µs. Each symbol of the U-SIG may be used to transmit the 26-bit information. For example, each symbol of the U-SIG may be transmitted/received based on 52 data tomes and 4 pilot tones.

Through the U-SIG (or U-SIG field), for example, A-bit information (e.g., 52 un-coded bits) may be transmitted. A first symbol of the U-SIG may transmit first X-bit information (e.g., 26 un-coded bits) of the A-bit information, and a second symbol of the U-SIB may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, "000000".

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits may indicate that the TX/RX PPDU is an EHT PPDU. In other words, when the transmitting STA transmits the EHT PPDU, the PHY version identifier of 3 bits may be set to a first value. In other words, the receiving STA may determine that the RX PPDU is the EHT PPDU, based on the PHY version identifier having the first value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a TXOP length and information related to a BSS color ID.

For example, when the EHT PPDU is divided into various types (e.g., various types such as an EHT PPDU related to an SU mode, an EHT PPDU related to a MU mode, an EHT PPDU related to a TB mode, an EHT PPDU related to extended range transmission, or the like), information related to the type of the EHT PPDU may be included in the version-dependent bits of the U-SIG.

For example, the U-SIG may include: 1) a bandwidth field including information related to a bandwidth; 2) a field including information related to an MCS scheme applied to EHT-SIG; 3) an indication field including information regarding whether a dual subcarrier modulation (DCM) scheme is applied to EHT-SIG; 4) a field including information related to the number of symbol used for EHT-SIG; 5) a field including information regarding whether the EHT-SIG is generated across a full band; 6) a field including information related to a type of EHT-LTF/STF; and 7) information related to a field indicating an EHT-LTF length and a CP length.

Preamble puncturing may be applied to the PPDU of FIG. 10. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or EHT-SIG. For example, a first field of the U-SIG may include information related to a contiguous bandwidth, and second field of the U-SIG may include information related to the preamble puncturing applied to the PPDU.

For example, the U-SIG and the EHT-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an EHT-SIG contiguous to the first U-SIG may include information related to a preamble puncturing applied to the second 80 MHz band (i.e., information related to a preamble puncturing pattern), and an EHT-SIG contiguous to the second U-SIG may include information related to a preamble puncturing (i.e., information related to a preamble puncturing pattern) applied to the first 80 MHz band.

Additionally or alternatively, the U-SIG and the EHT-SIG may include the information related to the preamble puncturing, based on the following method. The U-SIG may include information related to a preamble puncturing (i.e., information related to a preamble puncturing pattern) for all bands. That is, the EHT-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The EHT-SIG of FIG. 10 may include control information for the receiving STA. The EHT-SIG may be transmitted through at least one symbol, and one symbol may have a length of 4 µs. Information related to the number of symbols used for the EHT-SIG may be included in the U-SIG.

The EHT-SIG may include a technical feature of the HE-SIG-B described with reference to FIG. 8 and FIG. 9. For example, the EHT-SIG may include a common field and a user-specific field as in the example of FIG. 8. The common field of the EHT-SIG may be omitted, and the number of user-specific fields may be determined based on the number of users.

As in the example of FIG. 8, the common field of the EHT-SIG and the user-specific field of the EHT-SIG may be individually coded. One user block field included in the user-specific field may include information for two users, but a last user block field included in the user-specific field may include information for one user. That is, one user block field of the EHT-SIG may include up to two user fields. As in the example of FIG. 9, each user field may be related to MU-MIMO allocation, or may be related to non-MU-MIMO allocation.

As in the example of FIG. 8, the common field of the EHT-SIG may include a CRC bit and a tail bit. A length of the CRC bit may be determined as 4 bits. A length of the tail bit may be determined as 6 bits, and may be set to '000000'.

As in the example of FIG. 8, the common field of the EHT-SIG may include RU allocation information. The RU allocation information may imply information related to a location of an RU to which a plurality of users (i.e., a plurality of receiving STAs) are allocated. The RU allocation information may be configured in unit of 8 bits (or N bits), as in Table 1.

A mode in which the common field of the EHT-SIG is omitted may be supported. The mode in the common field of the EHT-SIG is omitted may be called a compressed mode. When the compressed mode is used, a plurality of users (i.e., a plurality of receiving STAs) may decode the PPDU (e.g., the data field of the PPDU), based on non-OFDMA. That is, the plurality of users of the EHT PPDU may decode the PPDU (e.g., the data field of the PPDU) received through the same frequency band. Meanwhile, when a non-compressed mode is used, the plurality of users of the EHT PPDU may decode the PPDU (e.g., the data field of the PPDU), based on OFDMA. That is, the plurality of users of the EHT PPDU may receive the PPDU (e.g., the data field of the PPDU) through different frequency bands.

The EHT-SIG may be configured based on various MCS schemes. As described above, information related to an MCS scheme applied to the EHT-SIG may be included in U-SIG. The EHT-SIG may be configured based on a DCM scheme. For example, among N data tones (e.g., 52 data tones) allocated for the EHT-SIG, a first modulation scheme may be applied to half of consecutive tones, and a second modulation scheme may be applied to the remaining half of the consecutive tones. That is, a transmitting STA may use the first modulation scheme to modulate specific control information through a first symbol and allocate it to half of the consecutive tones, and may use the second modulation scheme to modulate the same control information by using a second symbol and allocate it to the remaining half of the consecutive tones. As described above, information (e.g., a 1-bit field) regarding whether the DCM scheme is applied to the EHT-SIG may be included in the U-SIG. The EHT-STF of FIG. 10 may be used for improving automatic gain control estimation in a multiple input multiple output (MIMO) environment or an OFDMA environment. The EHT-LTF of FIG. 10 may be used for estimating a channel in the MIMO environment or the OFDMA environment.

Information related to a type of STF and/or LTF (information related to a GI applied to LTF is also included) may be included in a SIG-A field and/or SIG-B field or the like of FIG. 10.

A PPDU (e.g., EHT-PPDU) of FIG. 10 may be configured based on the example of FIG. 5 and FIG. 6.

For example, an EHT PPDU transmitted on a 20 MHz band, i.e., a 20 MHz EHT PPDU, may be configured based on the RU of FIG. 5. That is, a location of an RU of EHT-STF, EHT-LTF, and data fields included in the EHT PPDU may be determined as shown in FIG. 5.

An EHT PPDU transmitted on a 40 MHz band, i.e., a 40 MHz EHT PPDU, may be configured based on the RU of FIG. 6. That is, a location of an RU of EHT-STF, EHT-LTF, and data fields included in the EHT PPDU may be determined as shown in FIG. 6.

Since the RU location of FIG. 6 corresponds to 40 MHz, a tone-plan for 80 MHz may be determined when the pattern of FIG. 6 is repeated twice. That is, an 80 MHz EHT PPDU may be transmitted based on a new tone-plan in which not the RU of FIG. 7 but the RU of FIG. 6 is repeated twice.

When the pattern of FIG. 6 is repeated twice, 23 tones (i.e., 11 guard tones + 12 guard tones) may be configured in a DC region. That is, a tone-plan for an 80 MHz EHT PPDU allocated based on OFDMA may have 23 DC tones. Unlike this, an 80 MHz EHT PPDU allocated based on non-OFDMA (i.e., a non-OFDMA full bandwidth 80 MHz PPDU) may be configured based on a 996-RU, and may include 5 DC tones, 12 left guard tones, and 11 right guard tones.

A tone-plan for 160/240/320 MHz may be configured in such a manner that the pattern of FIG. 6 is repeated several times.

The PPDU of FIG. 10 may be determined (or identified) as an EHT PPDU based on the following method.

A receiving STA may determine a type of an RX PPDU as the EHT PPDU, based on the following aspect. For example, the RX PPDU may be determined as the EHT PPDU: 1) when a first symbol after an L-LTF signal of the RX PPDU is a BPSK symbol; 2) when RL-SIG in which the L-SIG of the RX PPDU is repeated is detected; and 3) when a result of applying "modulo 3" to a value of a length field of the L-SIG of the RX PPDU is detected as "0". When the RX PPDU is determined as the EHT PPDU, the receiving STA may detect a type of the EHT PPDU (e.g., an SU/MU/Trigger-based/Extended Range type), based on bit information included in a symbol after the RL-SIG of FIG. 10. In other words, the receiving STA may determine the RX PPDU as the EHT PPDU, based on: 1) a first symbol after an L-LTF signal, which is a BPSK symbol; 2) RL-SIG contiguous to the L-SIG field and identical to L-SIG; 3) L-SIG including a length field in which a result of applying "modulo 3" is set to "0"; and 4) a 3-bit PHY version identifier of the aforementioned U-SIG (e.g., a PHY version identifier having a first value).

For example, the receiving STA may determine the type of the RX PPDU as the EHT PPDU, based on the following aspect. For example, the RX PPDU may be determined as the HE PPDU: 1) when a first symbol after an L-LTF signal is a BPSK symbol; 2) when RL-SIG in which the L-SIG is repeated is detected; and 3) when a result of applying "modulo 3" to a value of a length field of the L-SIG is detected as "1" or "2".

For example, the receiving STA may determine the type of the RX PPDU as a non-HT, HT, and VHT PPDU, based on the following aspect. For example, the RX PPDU may be determined as the non-HT, HT, and VHT PPDU: 1) when a first symbol after an L-LTF signal is a BPSK symbol; and 2) when RL-SIG in which L-SIG is repeated is not detected. In addition, even if the receiving STA detects that the RL-SIG is repeated, when a result of applying "modulo 3" to the length value of the L-SIG is detected as "0", the RX PPDU may be determined as the non-HT, HT, and VHT PPDU.

In the following example, a signal represented as a (TX/RX/UL/DL) signal, a (TX/RX/UL/DL) frame, a (TX/RX/UL/DL) packet, a (TX/RX/UL/DL) data unit, (TX/RX/UL/DL) data, or the like may be a signal transmitted/received based on the PPDU of FIG. 10. The PPDU of FIG. 10 may be used to transmit/receive frames of various types. For example, the PPDU of FIG. 10 may be used for a control frame. An example of the control frame may include a request to send (RTS), a clear to send (CTS), a power save-poll (PS-poll), BlockACKReq, BlockAck, a null data packet (NDP) announcement, and a trigger frame. For example, the PPDU of FIG. 10 may be used for a management frame. An example of the management frame may include a beacon frame, a (re-)association request frame, a (re-)association response frame, a probe request frame, and a probe response frame. For example, the PPDU of FIG. 10 may be used for a data frame. For example, the PPDU of FIG. 10 may be used to simultaneously transmit at least two or more of the control frames, the management frame, and the data frame.

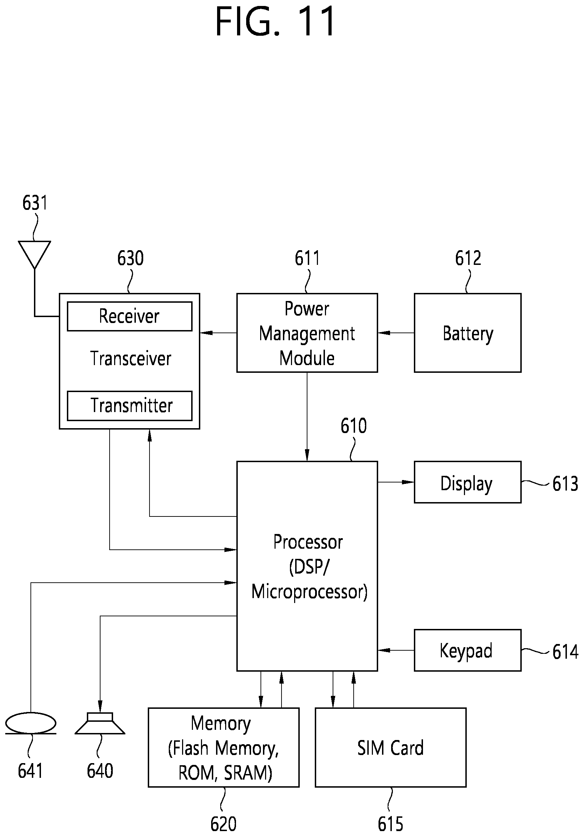

FIG. 11 illustrates an example of a modified transmission device and/or receiving device of the present specification.

Each device/STA of the sub-figure (a)/(b) of FIG. 1 may be modified as shown in FIG. 11. A transceiver 630 of FIG. 11 may be identical to the transceivers 113 and 123 of FIG. 1. The transceiver 630 of FIG. 11 may include a receiver and a transmitter.

A processor 610 of FIG. 11 may be identical to the processors 111 and 121 of FIG. 1. Alternatively, the processor 610 of FIG. 11 may be identical to the processing chips 114 and 124 of FIG. 1.

A memory 620 of FIG. 11 may be identical to the memories 112 and 122 of FIG. 1. Alternatively, the memory 620 of FIG. 11 may be a separate external memory different from the memories 112 and 122 of FIG. 1.

Referring to FIG. 11, a power management module 611 manages power for the processor 610 and/or the transceiver 630. A battery 612 supplies power to the power management module 611. A display 613 outputs a result processed by the processor 610. A keypad 614 receives inputs to be used by the processor 610. The keypad 614 may be displayed on the display 613. A SIM card 615 may be an integrated circuit which is used to securely store an international mobile subscriber identity (IMSI) and its related key, which are used to identify and authenticate subscribers on mobile telephony devices such as mobile phones and computers.

Referring to FIG. 11, a speaker 640 may output a result related to a sound processed by the processor 610. A microphone 641 may receive an input related to a sound to be used by the processor 610.

### 1. Definitions for U-SIG and EHT-SIG

The specific description of U-SIG and EHT-SIG defined in the 802.11be wireless LAN system is as follows.

The U-SIG field conveys information necessary for interpreting the EHT PPDU. The integer field of the U-SIG field is transmitted in unsigned binary format with the Least Significant Bit (LSB) first, where the LSB is in the lowest numbered bit position.

The table below shows the configuration of U-SIG in the EHT MU PPDU.

**[Table 3]**

| Two parts of U-SIG | Bit | Field | Number of bits | Description | |
|---|---|---|---|---|---|
| U-SIG-1 | B0-B2 | PHY Version Identifier | 3 | Differentiate between different PHY clauses. | |
| | | | | | Set to 0 for EHT. |
| | | | | | Values 1-7 are Validate. |
| | B3-B5 | Bandwidth | 3 | Set to 0 for 20 MHz. | |
| | | | | Set to 1 for 40 MHz. | |
| | | | | Set to 2 for 80 MHz. | |
| | | | | Set to 3 for 160 MHz. | |
| | | | | Set to 4 for 320 MHz-1. | |
| | | | | Set to 5 for 320 MHz-2. | |
| | | | | Values 6 and 7 are Validate. | |
| | B6 | UL/DL | 1 | Indicates whether the PPDU is sent in UL or DL. Set to the TXVECTOR parameter UPLINK_FLAG. | |
| | | | | | A value of 1 indicates the PPDU is addressed to an AP. |
| | | | | | A value of 0 indicates the PPDU is addressed to a non-AP STA. |
| | B7-B12 | BSS Color | 6 | An identifier of the BSS. | |
| | | | | Set to the TXVECTOR parameter | |
| | | | | BSS_COLOR. | |

| **Two parts of U-SIG** | **Bit** | **Field** | **Number of bits** | **Description** | | |
|---|---|---|---|---|---|---|
| | B13-B19 | TXOP | 7 | If the TXVECTOR parameter TXOP_DURATION is UNSPECIFIED, set to 127 to indicate the absence of duration information. | | |
| | | | | If the TXVECTOR parameter TXOP _DURATION is an integer value, set to a value less than 127 to indicate duration information for NAV setting and protection of the TXOP as follows: | | |
| | | | | | | If the TXVECTOR parameter TXO-P_DURATION is less than 512, set to 2 × floor(TXOP_DURATION/8). |
| | | | | | | Otherwise, set to 2 × floor((TXOP_DURATION - 512)/ 128)+ 1. |
| | B20-B24 | Disregard | 5 | Set to all 1s and treat as Disregard. | | |
| | B25 | Validate | 1 | Set to 1 and treat as Validate. | | |
| U-SIG-2 | B0-B1 | PPDU Type And | 2 | If the UL/DL field is set to 0: | | |
| | | Compression Mode | | | A value of 0 indicates a DL OFDMA transmission. | |
| | | | | | A value of 1 indicates a transmission to a single user or an EHT sounding NDP. | |
| | | | | | A value of 2 indicates a non-OFDMA DL MU-MIMO transmission. | |
| | | | | | A value of 3 is Validate. | |
| | | | | If the UL/DL field is set to 1: | | |
| | | | | | A value of 1 indicates a transmission to a single user or an EHT sounding NDP. | |
| | | | | | Values 2 and 3 are Validate. | |
| | | | | | NOTE-A value of 0 indicates a TB PPDU. | |
| | | | | For further clarifications on all values of this field, refer to Table 9 (Combination of UL/DL and PPDU Type And Compression Mode field). | | |
| | B2 | Validate | 1 | Set to 1 and treat as Validate. | | |

| **Two parts of U-SIG** | **Bit** | **Field** | **Number of bits** | **Description** | |
|---|---|---|---|---|---|
| | B3-B7 | Punctured Channel Information | 5 | If the PPDU Type And Compression Mode field is set to 1 regardless of the value of the UL/DL field, or the PPDU Type And Compression Mode field is set to 2 and the UL/DL field is 0: | |
| | | | | | Indicates the puncturing information of this non-OFDMA transmission. See Table 10 (Definition of the Punctured Channel Information field in the U-SIG for an EHT MU PPDU using non-OFDMA transmissions) for the definition. Undefined values of this field are Validate. |
| | | | | If the PPDU Type And Compression Mode field is set to 0 and the UL/DL field is 0: | |
| | | | | | If the Bandwidth field is set to a value between 2 and 5, which indicates an 80 MHz, 160 MHz or 320 MHz PPDU, then B3-B6 is a 4-bit bitmap that indicates which 20 MHz subchannel is punctured in the 80 MHz frequency subblock where U-SIG processing is performed. The 4-bit bitmap is indexed by the 20 MHz subchannels in ascending order with B3 indicating the lowest frequency 20 MHz subchannel. For each of the bits B3-B6, a value of 0 indicates that the corresponding 20 MHz channel is punctured, and a value of 1 is used otherwise. The following allowed punctured patterns (B3-B6) are defined for an 80 MHz frequency subblock: 1111 (no puncturing), 0111, 1011, 1101, 1110, 0011, 1100, and 1001. Any field values other than the allowed punctured patterns are Validate. Field value may be varied from one 80 MHz to the other. |
| | | | | | If the Bandwidth field is set to 0 or 1, which indicates a 20/40 MHz PPDU, B3-B6 are set to all 1s. Other values are Validate. |
| | | | | | B7 is set to 1 and Disregard. |
| | B8 | Validate | 1 | Set to 1 and treat as Validate. | |
| | B9-B10 | EHT-SIG MCS | 2 | Indicates the MCS used for modulating the EHT-SIG. | |
| | | | | Set to 0 for EHT-MCS 0. | |
| | | | | Set to 1 for EHT-MCS 1. | |
| | | | | Set to 2 for EHT-MCS 3. | |
| | | | | Set to 3 for EHT-MCS 15. | |

| **Two parts of U-SIG** | **Bit** | **Field** | **Number of bits** | **Description** |
|---|---|---|---|---|
| | B11-B15 | Number Of EHT-SIG Symbols | 5 | Indicates the number of EHT-SIG symbols. Set to a value that is the number of EHT-SIG symbols minus 1. This value shall be the same in every 80 MHz frequency subblock. |
| | B16-B19 | CRC | 4 | CRC for bits 0-41 of the U-SIG field. Bits 0-41 of the U-SIG field correspond to bits 0-25 of U-S1G-1 field followed by bits 0-15 of U-SIG-2 field. |
| | B20-B25 | Tail | 6 | Used to terminate the trellis of the convolutional decoder. Set to 0. |

The EHT-SIG field provides additional signaling to the U-SIG field to enable STAs to interpret the EHT MU PPDU. In an EHT MU PPDU, the EHT-SIG field contains the U-SIG overflow bit, which is common to all users. The EHT-SIG field further contains resource allocation information, which allows STAs to query the resources to be used in the EHT modulated field of the PPDU. The integer fields of the EHT-SIG field are transmitted in unsigned binary format, LSB first, where the LSB is in the lowest numbered bit position.

The EHT-SIG field of a 20 MHz EHT MU PPDU contains one EHT-SIG content channel. For OFDMA transmission and non-OFDMA transmission to multiuser, the EHT-SIG field of an EHT MU PPDU of 40 MHz or 80 MHz contains two EHT-SIG content channels. For OFDMA transmission and non-OFDMA transmission to multiuser, the EHT-SIG field of an EHT MU PPDU of 160 MHz or higher contains two EHT-SIG content channels per 80 MHz frequency subblock. The EHT-SIG content channel per 80 MHz frequency subblock can convey different information when the bandwidth of the EHT MU PPDU for OFDMA transmission is wider than 80 MHz. The EHT-SIG field of an EHT SU transmission or the EHT-SIG field of an EHT sounding NDP contains one EHT-SIG content channel, which is replicated on each non-punctured 20 MHz subchannel when the EHT PPDU is 40 MHz or longer.

For EHT MU PPDUs, except for EHT Sounding NDP, each EHT-SIG content channel consists of common fields and user-specific fields. For EHT Sounding NDP, there are no user-specific fields and the EHT-SIG content channel consists of only common fields.

The table below shows the configuration of the RU Allocation subfield included in the common field of EHT-SIG in an EHT MU PPDU that performs OFDMA transmission.

**[Table 4]**

| **Bit** | **Subfield** | **Number of subfields** | **Number of bits per subfield** | **Description** |
|---|---|---|---|---|
| B17-B 16+9N | RU Allocation-A | *N* | 9 | *N* RU Allocation-A subfields are present in an EHT-SIG content channel, where: |
| | | | | *N* is set to 1 if the Bandwidth field in the U-SIG field is equal to 0 or 1. |
| | | | | N is set to 2 if the Bandwidth field in the U-SIG field is equal to 2, 3, 4, or 5. |
| | | | | Each RU Allocation-A subfield in an EHT-SIG content channel corresponding to a 20 MHz frequency subchannel indicates the RU or MRU assignment, including the size of the RU(s) or MRU(s) and their placement in the frequency domain, to be used in the EHT modulated fields of the EHT MU PPDU in the frequency domain, where the subcarrier indices of the RU(s) or MRU(s) meet the conditions in Table 6 (RUs or MRUs associated with each RU Allocation subfield for each EHT-SIG content channel and PPDU bandwidth). Each RU Allocation-A subfield also indicates information needed to compute the number of users allocated to each of these RU(s) or MRU(s). |

| **Bit** | **Subfield** | **Number of subfields** | **Number of bits per subfield** | **Description** |
|---|---|---|---|---|
| B27+9*N* B26+9*N*+9*M* | RU Allocation-B | *M* | 9 | *M* RU Allocation-B subfields are present in an EHT-SIG content channel if the Bandwidth subfield in the U-SIG field indicates a 160 MHz, 320 MHz-1, or 320 MHz-2 EHT MU PPDU where AT is equal to 2 or 6 as follows: |
| | | | | *M* is set to 2 if the Bandwidth field in the U-SIG field is 3. |
| | | | | *M* is set to 6 if the Bandwidth field in the U-SIG field is 4 or 5 |
| | | | | The subfields are not present otherwise (i.e., AT is equal to 0). |
| | | | | Each RU Allocation-B subfield in an EHT-SIG content channel corresponding to a 20 MHz frequency subchannel indicates the RU or MRU assignment, including the size of the RU(s) or MRU(s) and their placement in the frequency domain, to be used in the EHT modulated fields of the EHT MU PPDU in the frequency domain, where the subcarrier indices of the RU(s) or MRU(s) meet the conditions in Table 6 (RUs or MRUs associated with each RU Allocation subfield for each EHT-SIG content channel and PPDU bandwidth). Each RU Allocation-B subfield also indicates information needed to compute the number of users allocated to each of these RU(s) or MRU(s). |

The mapping from the 9-bit RU Allocation subfield to the number of user fields per RU or MRU contributing to RU allocation and user-specific fields of the same EHT-SIG content channel is defined by the RU Allocation subfield as shown in the table below.

**[Table 5]**

| **RU Allocation subfield (B8 B7 B6 B5 B4 B3 B2 B1 B0)** | **1** | **2** | **3** | **4** | **5** | **6** | **7** | **8** | **9** | **Number of entries** |
|---|---|---|---|---|---|---|---|---|---|---|
| 0 (000000000) | 26 | 26 | 26 | 26 | 26 | 26 | 26 | 26 | 26 | 1 |
| 1 (000000001) | 26 | 26 | 26 | 26 | 26 | 26 | 26 | 52 | | 1 |
| 2 (000000010) | 26 | 26 | 26 | 26 | 26 | 52 | | 26 | 26 | 1 |
| 3 (000000011) | 26 | 26 | 26 | 26 | 26 | 52 | | 52 | | 1 |
| 4 (000000100) | 26 | 26 | 52 | | 26 | 26 | 26 | 26 | 26 | 1 |
| 5 (000000101) | 26 | 26 | 52 | | 26 | 26 | 26 | 52 | | 1 |
| 6 (000000110) | 26 | 26 | 52 | | 26 | 52 | | 26 | 26 | 1 |
| 7 (000000111) | 26 | 26 | 52 | | 26 | 52 | | 52 | | 1 |
| 8 (000001000) | 52 | | 26 | 26 | 26 | 26 | 26 | 26 | 26 | 1 |
| 9(000001001) | 52 | | 26 | 26 | 26 | 26 | 26 | 52 | | 1 |
| 10 (000001010) | 52 | | 26 | 26 | 26 | 52 | | 26 | 26 | 1 |
| 11 (000001011) | 52 | | 26 | 26 | 26 | 52 | | 52 | | 1 |
| 12 (000001100) | 52 | | 52 | | 26 | 26 | 26 | 26 | 26 | 1 |
| 13 (000001101) | 52 | | 52 | | 26 | 26 | 26 | 52 | | 1 |
| 14 (000001110) | 52 | | 52 | | 26 | 52 | | 26 | 26 | 1 |
| 15 (000001111) | 52 | | 52 | | 26 | 52 | | 52 | | 1 |
| 16 (000010000) | 26 | 26 | 26 | 26 | 26 | 106 | | | | 1 |
| 17 (000010001) | 26 | 26 | 52 | | 26 | 106 | | | | 1 |
| 18 (000010010) | 52 | | 26 | 26 | 26 | 106 | | | | 1 |
| 19 (000010011) | 52 | | 52 | | 26 | 106 | | | | 1 |
| 20 (000010100) | 106 | | | | 26 | 26 | 26 | 26 | 26 | 1 |
| 21 (000010101) | 106 | | | | 26 | 26 | 26 | 52 | | 1 |
| 22 (000010110) | 106 | | | | 26 | 52 | | 26 | 26 | 1 |
| 23 (000010111) | 106 | | | | 26 | 52 | | 52 | | 1 |
| 24 (000011000) | 52 | | 52 | | - | 52 | | 52 | | 1 |

| **RU Allocation subfield (B8 B7 B6 B5 B4 B3 B2 B1 B0)** | **1** | **2** | **3** | **4** | **5** | **6** | **7** | **8** | **9** | **Number of entries** |
|---|---|---|---|---|---|---|---|---|---|---|
| 25 (000011001) | 106 | | | | 26 | 106 | | | | 1 |
| 26 (000011010) | Punctured 242-tone RU | | | | | | | | | 1 |
| 27 (000011011) | Unassigned 242-tone RU | | | | | | | | | 1 |
| 28 (000011100) | 242-tone RU; allocated but contributes zero User fields to the User Specific field in the same EHT-SIG content channel as this RU Allocation subfield. | | | | | | | | | 1 |
| 29 (000011101) | 484-tone RU; allocated but contributes zero User fields to the User Specific field in the same EHT-SIG content channel as this RU Allocation subfield. | | | | | | | | | 1 |
| 30 (000011110) | 996-tone RU; allocated but contributes zero User fields to the User Specific field in the same EHT-SIG content channel as this RU Allocation subfield. | | | | | | | | | 1 |
| 31(000011111) | Validate | | | | | | | | | 1 |
| 32 (000100000) | 26 | 26 | 26 | 26 | 26 | 52+26 | | | 26 | 1 |
| 33(000100001) | 26 | 26 | 52 | | 26 | 52+26 | | | 26 | 1 |
| 34 (000100010) | 52 | | 26 | 26 | 26 | 52+26 | | | 26 | 1 |
| 35 (000100011) | 52 | | 52 | | 26 | 52+26 | | | 26 | 1 |
| 36 (000100100) | 26 | 52+26 | | | 26 | 26 | 26 | 26 | 26 | 1 |
| 37(000100101) | 26 | 52+26 | | | 26 | 26 | 26 | 52 | | 1 |
| 38 (000100110) | 26 | 52+26 | | | 26 | 52 | | 26 | 26 | 1 |
| 39 (000100111) | 26 | 52+26 | | | 26 | 52 | | 52 | | 1 |
| 40 (000101000) | 26 | 26 | 26 | 26 | 106+26 | | | | | 1 |
| 41 (000101001) | 26 | 26 | 52 | | 106+26 | | | | | 1 |
| 42 (000101010) | 52 | | 26 | 26 | 106+26 | | | | | 1 |
| 43 (000101011) | 52 | | 52 | | 106+26 | | | | | 1 |
| 44 (000101100) | 106+26 | | | | | 26 | 26 | 26 | 26 | 1 |
| 45 (000101101) | 106+26 | | | | | 26 | 26 | 52 | | 1 |
| 46 (000101110) | 106+26 | | | | | 52 | | 26 | 26 | 1 |
| 47 (000101111) | 106+26 | | | | | 52 | | 52 | | 1 |
| 48 (000110000) | 106+26 | | | | | 106 | | | | 1 |
| 49 (000110001) | 106+26 | | | | | 52+26 | | | 26 | 1 |
| 50 (000110010) | 106 | | | | 106+26 | | | | | 1 |
| 51 (000110011) | 26 | 52+26 | | | 106+26 | | | | | 1 |
| 52 (000110100) | 106 | | | | 26 | 52+26 | | | 26 | 1 |
| 53 (000110101) | 26 | 52+26 | | | 26 | 106 | | | | 1 |

| **RU Allocation subfield (B8 B7 B6 B5 B4 B3 B2 B1 B0)** | **1** | **2** | **3** | **4** | **5** | **6** | **7** | **8** | **9** | **Number of entries** |
|---|---|---|---|---|---|---|---|---|---|---|
| 54 (000110110) | 26 | 52+26 | | | 26 | 52+26 | | | 26 | 1 |
| 55 (000110111) | 52 | | 52+26 | | | 52 | | 52 | | 1 |
| 56-63 (000111000-000111111) | Validate | | | | | | | | | 8 |
| 64-71 (00100y₂y₁y₀) | 242 | | | | | | | | | 8 |
| 72-79 (001001y₂y₁y₀) | 484 | | | | | | | | | 8 |
| 80-87 (001010y₂y₁y₀) | 996 | | | | | | | | | 8 |
| 88-95 (001011y₂y₁y₀) | 2×996 | | | | | | | | | 8 |
| 96-103 (001100y₂y₁y₀) | MRU of pattern [gap-242]-242-484, specifically 484+242-tone MRU-1, 5, 9, and 13 within the first, second, third, and fourth 80 MHz frequency subblock in increasing frequency order, respectively | | | | | | | | | 8 |
| 104-111 (001101y₂y₁y₀) | MRU of pattern 242-[gap-242]-484, specifically 484+242-tone MRU-2, 6, 10, and 14 within the first, second, third, and fourth 80 MHz frequency subblock in increasing frequency order, respectively | | | | | | | | | 8 |
| 112-119 (001110y₂y₁y₀) | MRU of pattern 484-[gap-242]-242, specifically 484+242-tone MRU-3, 7, 11, and 15 within the first, second, third, and fourth 80 MHz frequency subblock in increasing frequency order, respectively | | | | | | | | | 8 |
| 120-127 (001111y₂y₁y₀) | MRU of pattern484-242-[gap-242], specifically 484+242-tone MRU-4, 8, 12, and 16 within the first, second, third, and fourth 80 MHz frequency subblock in increasing frequency order, respectively | | | | | | | | | 8 |
| 128-135 (010000y₂y₁y₀) | MRU of pattern [gap-484]-484-996, specifically 996+484-tone MRU-1 and 5 within the first and second 160 MHz subblock in increasing frequency order, respectively | | | | | | | | | 8 |
| 136-143 (010001₂y₁y₀) | MRU of pattern 484-[gap-484]-996, specifically 996+484-tone MRU-2 and 6 within the first and second 160 MHz subblock in increasing frequency order, respectively | | | | | | | | | 8 |
| 144-151 (010010y₂y₁y₀) | MRU of pattern 996-[gap-484]-484, specifically 996+484-tone MRU-3 and 7 within the first and second 160 MHz subblock in increasing frequency order, respectively | | | | | | | | | 8 |
| 152-159 (010011y₂y₁y₀) | MRU of pattern 996-484-[gap-484], specifically 996+484-tone MRU-4 and 8 within the first and second 160 MHz subblock in increasing frequency order, respectively | | | | | | | | | 8 |
| 160-167 (010100y₂y₁y₀) | MRU of pattern [gap-996]-996-996-996, specifically 3×996-tone MRU-1 | | | | | | | | | 8 |
| 168-175 (010101y₂y₁y₀) | MRU of pattern 996-[gap-996]-996-996, specifically 3×996-tone MRU-2 | | | | | | | | | 8 |
| 176-183 (010110y₂y₁y₀) | MRU of pattern 996-996-[gap-996]-996, specifically 3×996-tone MRU-3 | | | | | | | | | 8 |
| 184-191 (010111y₂y₁y₀) | MRU of pattern 996-996-996-[gap-996], specifically 3×996-tone MRU-4 | | | | | | | | | 8 |
| 192-199 (011000y₂y₁y₀) | MRU of pattern [gap-484]-484-996-996-996, specifically 3×996+484-tone MRU-1 | | | | | | | | | 8 |

| **RU Allocation subfield (B8 B7 B6 B5 B4 B3 B2 B1 B0)** | **1** | **2** | **3** | **4** | **5** | **6** | **7** | **8** | **9** | **Number of entries** |
|---|---|---|---|---|---|---|---|---|---|---|
| 200-207 (011001y₂y₁y₀) | MRU of pattern 484-[gap-484]-996-996-996, specifically 3×996+484-tone MRU-2 | | | | | | | | | 8 |
| 208-215 (011010y₂y₁y₀) | MRU of pattern 996-[gap-484]-484-996-996, specifically 3×996+484-tone MRU-3 | | | | | | | | | 8 |
| 216-223 (011011y₂y₁y₀) | MRU of pattern 996-484-[gap-484]-996-996, specifically 3×996+484-tone MRU-4 | | | | | | | | | 8 |
| 224-231 (011100y₂y₁y₀) | MRU of pattern 996-996-[gap-484]-484-996, specifically 3×996+484-tone MRU-5 | | | | | | | | | 8 |
| 232-239 (011101y₂y₁y₀) | MRU of pattern 996-996-484-[gap-484]-996, specifically 3×996+484-tone MRU-6 | | | | | | | | | 8 |
| 240-247 (011110y₂y₁y₀) | MRU of pattern 996-996-996-[gap-484]-484, specifically 3×996+484-tone MRU-7 | | | | | | | | | 8 |
| 248-255 (011111y₂y₁y₀) | MRU of pattern 996-996-996-494-[gap-484], specifically 3×996+484-tone MRU-8 | | | | | | | | | 8 |
| 256-263 (100000y₂y₁y₀) | MRU of pattern [gap-484]-484-996-996, specifically 2×996+484-tone MRU-1 and 7 within the 240 MHz subblock composed of the first, second, and third 80 MHz frequency subblock and the 240 MHz subblock composed of the second, third, and fourth 80 MHz frequency subblock in increasing frequency order, respectively | | | | | | | | | 8 |
| 264-271 (100001y₂y₁y₀) | MRU of pattern 484-[gap-484]-996-996, specifically 2×996+484-tone MRU-2 and 8 within the 240 MHz subblock composed of the first, second, and third 80 MHz frequency subblock and the 240 MHz subblock composed of the second, third, and fourth 80 MHz frequency subblock in increasing frequency order, respectively | | | | | | | | | 8 |
| 272-279 (100010y₂y₁y₀) | MRU of pattern 996-[gap-484]-484-996, specifically 2×996+484-tone MRU-3 and 9 within the 240 MHz subblock composed of the first, second, and third 80 MHz frequency subblock and the 240 MHz subblock composed of the second, third, and fourth 80 MHz frequency subblock in increasing frequency order, respectively | | | | | | | | | 8 |
| 280-287 (100011y₂y₁y₀) | MRU of pattern 996-484-[gap-484]-996, specifically 2×996+484-tone MRU-4 and 10 within the 240 MHz subblock composed of the first, second, and third 80 MHz frequency subblock and the 240 MHz subblock composed of the second, third, and fourth 80 MHz frequency subblock in increasing frequency order, respectively | | | | | | | | | 8 |
| 288-295 (100100y₂y₁y₀) | MRU of pattern 996-996-[gap-484]-484, specifically 2×996+484-tone MRU-5 and 11 within the 240 MHz subblock composed of the first, second, and third 80 MHz frequency subblock and the 240 MHz subblock composed of the second, third, and fourth 80 MHz frequency subblock in increasing frequency order, respectively | | | | | | | | | 8 |

| **RU Allocation subfield (B8 B7 B6 B5 B4 B3 B2 B1 B0)** | **1** | **2** | **3** | **4** | **5** | **6** | **7** | **8** | **9** | **Number of entries** |
|---|---|---|---|---|---|---|---|---|---|---|
| 296-303 (100101y₂y₁y₀) | MRU of pattern 996-996-484-[gap-484], specifically 2×996+484-tone MRU-6 and 12 within the 240 MHz subblock composed of the first, second, and third 80 MHz frequency subblock and the 240 MHz subblock composed of the second, third, and fourth 80 MHz frequency subblock in increasing frequency order, respectively | | | | | | | | | 8 |
| 304-511 (100110y₂y₁y₀-111111y₂y₁y₀) | Disregard | | | | | | | | | 26×8 |
| For an RU Allocation subfield with value greater than or equal to 64, y₂y₁y₀ = 000-111 indicates the number of User fields in the EHT-SIG content channel that contains the corresponding 9-bit RU Allocation subfield. The binary vector y₂y₁y₀ indicates *Nᵤₛₑᵣ*(*r*, *c*) = 2² × *y*₂ + 2 × *y*₁ + *y*₀ + 1 User fields in the EHT-SIG content channel that contains the corresponding 9-bit RU Allocation subfield. | | | | | | | | | | |
| [Gap-242/484/996] indicates a 242/484/996-tone RU that is not overlapped with the RU or MRU indicated by the 9-bit RU Allocation subfield and is to help indicate the frequency order of the MRU within an 80/160/240/320 MHz subblock. | | | | | | | | | | |

The RU or MRU associated with each RU Allocation subfield for each EHT-SIG content channel and PPDU bandwidth is defined as follows:

**[Table 6]**

| **PPDU bandwidth** | **RU Allocation subfield** | **RUs or MRUs in the subcarrier range, or overlapping with the subcarrier range if the RU or MRU is larger than a 242-tone RU** |
|---|---|---|
| 20 MHz | The RU Allocation subfield in a single EHT-SIG content channel | [-122: 122] |
| 40 MHz | The RU Allocation subfield in EHT-SIG content channel 1 | [-244: -3] |
| | The RU Allocation subfield in EHT-SIG content channel 2 | [3: 244] |
| 80 MHz | The first RU Allocation subfield in EHT-SIG content channel 1 | [-500: -259] |
| | The first RU Allocation subfield in EHT-SIG content channel 2 | [-253: -12] |
| | The second RU Allocation subfield in EHT-SIG content channel 1 | [12: 253] |
| | The second RU Allocation subfield in EHT-SIG content channel 2 | [259: 500] |
| 160 MHz | The first RU Allocation subfield in EHT-SIG content channel 1 | [-1012: -771] |
| | The first RU Allocation subfield in EHT-SIG content channel 2 | [-765: -524] |
| | The second RU Allocation subfield in EHT-SIG content channel 1 | [-500: -259] |
| | The second RU Allocation subfield in EHT-SIG content channel 2 | [-253: -12] |
| | The third RU Allocation subfield in EHT-SIG content channel 1 | [12: 253] |
| | The third RU Allocation subfield in EHT-SIG content channel 2 | [259: 500] |
| | The fourth RU Allocation subfield in EHT-SIG content channel 1 | [524: 765] |
| | The fourth RU Allocation subfield in EHT-SIG content channel 2 | [771: 1012] |

| **PPDU bandwidth** | **RU Allocation subfield** | **RUs or MRUs in the subcarrier range, or overlapping with the subcarrier range if the RU or MRU is larger than a 242-tone RU** |
|---|---|---|
| 320 MHz | The first RU Allocation subfield in EHT-SIG content channel 1 | [-2036: -1795] |
| | The first RU Allocation subfield in EHT-SIG content channel 2 | [-1789: -1548] |
| | The second RU Allocation subfield in EHT-SIG content channel 1 | [-1524: -1283] |
| | The second RU Allocation subfield in EHT-SIG content channel 2 | [-1277: -1036] |
| | The third RU Allocation subfield in EHT-SIG content channel 1 | [-1012: -771] |
| | The third RU Allocation subfield in EHT-SIG content channel 2 | [-765: -524] |
| | The fourth RU Allocation subfield in EHT-SIG content channel 1 | [-500: -259] |
| | The fourth RU Allocation subfield in EHT-SIG content channel 2 | [-253: -12] |
| | The fifth RU Allocation subfield in EHT-SIG content channel 1 | [12: 253] |
| | The fifth RU Allocation subfield in EHT-SIG content channel 2 | [259: 500] |
| | The sixth RU Allocation subfield in EHT-SIG content channel 1 | [524: 765] |
| | The sixth RU Allocation subfield in EHT-SIG content channel 2 | [771: 1012] |
| | The seventh RU Allocation subfield in EHT-SIG content channel 1 | [1036: 1277] |
| | The seventh RU Allocation subfield in EHT-SIG content channel 2 | [1283: 1524] |
| | The eighth RU Allocation subfield in EHT-SIG content channel 1 | [1548: 1789] |
| | The eighth RU Allocation subfield in EHT-SIG content channel 2 | [1795: 2036] |

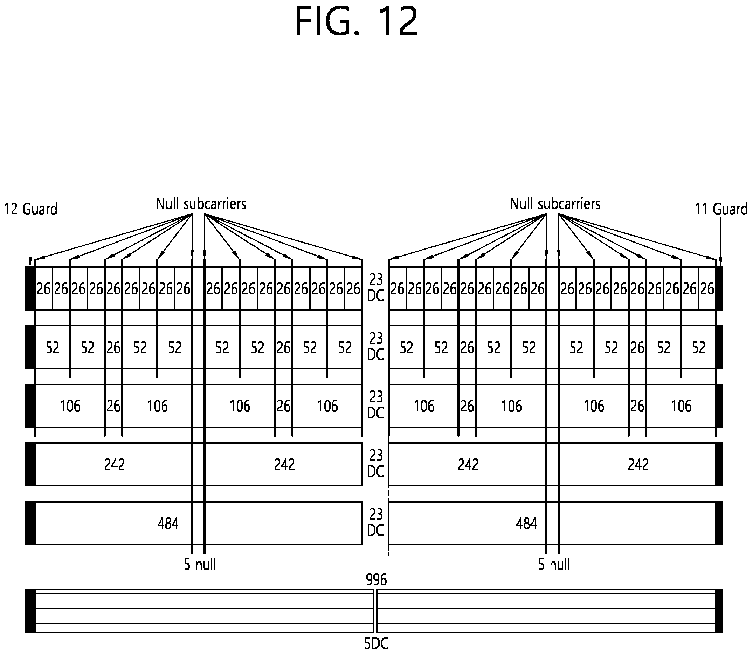

FIG. 12 is the 80 MHz tone plan defined in 802.11be.

The EHT tone plan and RU positions for an 80MHz PPDU are illustrated in FIG. 12. An EHT PPDU of 160MHz or more consists of multiple 80MHz frequency subblocks. The tone plan and RU allocation for each 80MHz frequency subblock are the same as the 80MHz EHT PPDU. If an 80MHz frequency subblock of a 160MHz or 320MHz EHT PPDU is not punctured and the entire 80MHz frequency subblock is used as an RU or is a part of an RU or an MRU, the 80MHz frequency subblock uses 996-tone RUs as illustrated in FIG. 12. If the 80MHz frequency subblock includes RUs smaller than 996 tones or a part of the 80MHz frequency subblock is punctured, the 80MHz frequency subblock uses the tone plan and RU allocation as illustrated in FIG. 12 except for the 996-tone RU.

### 2. Embodiments applicable to this specification

In order to improve throughput, efficiency, etc. in a wireless LAN system (802.11), a Multiple RU (MRU) method has been defined that combines multiple Resource Units (RUs) and assigns them to a specific STA. In Next Wi-Fi (or Next 802.11be), a new MRU can be defined for more efficient transmission, and this specification proposes a method that combines RUs/MRUs within a specific channel and RUs/MRUs within an adjacent 20 MHz channel.

In 802.11ax/802.11be, STAs that operate in a specific operating bandwidth are defined, and in particular, 20 MHz operating STAs that operate within a 20 MHz channel are defined. In addition, the state of each channel within the bandwidth is not constant and may be good or bad, and if there is data to be transmitted to multiple STAs or by multiple STAs, the amount of each data may not be the same but have different sizes. Considering these situations, it may be desirable to define various combinations of MRUs to use the channel more efficiently and increase throughput. However, as the number of MRU types increases, not only signaling overhead but also scheduling complexity may increase. Therefore, this specification proposes a method that combines the RU/MRU of a specific channel with a specific RU/MRU within a 20 MHz channel adjacent to the channel. By considering only adjacent channels, the increase in complexity and overhead may not be significant. In particular, since a 20 MHz channel can be shared by different STAs, channel utilization can be improved when considering the diversity of 20 MHz operating STAs, channel states, and data amounts, and thus, improvements in throughput and efficiency can be expected.

Based on this, various new MRUs can be proposed as follows.
1) Combination of 242 RU / 106 RU / 106+26 MRU / 52+26 MRU within a specific 20 MHz and 106 RU / 106+26 MRU / 52+26 MRU within the adjacent 20 MHz

Considering the case where some RUs cannot be allocated due to interference from adjacent channels within a specific 20 MHz, a method of combining some RUs/MRUs of the corresponding 20 MHz channel with RUs/MRUs within an adjacent 20 MHz channel (the 20 MHz channel on the opposite side of the channel where interference occurs) can be considered.

A new MRU can be proposed as follows, where '()' indicates a combination of RU/MRU within a 20 MHz channel, and the order is independent of the high or low frequency.

(242)+(106), (242)+(106+26), (242)+(52+26), (106)+(106), (106)+(106+26), (106)+(52+26), (106+26)+(106+26), (106+26)+(52+26), (52+26)+(52+26)

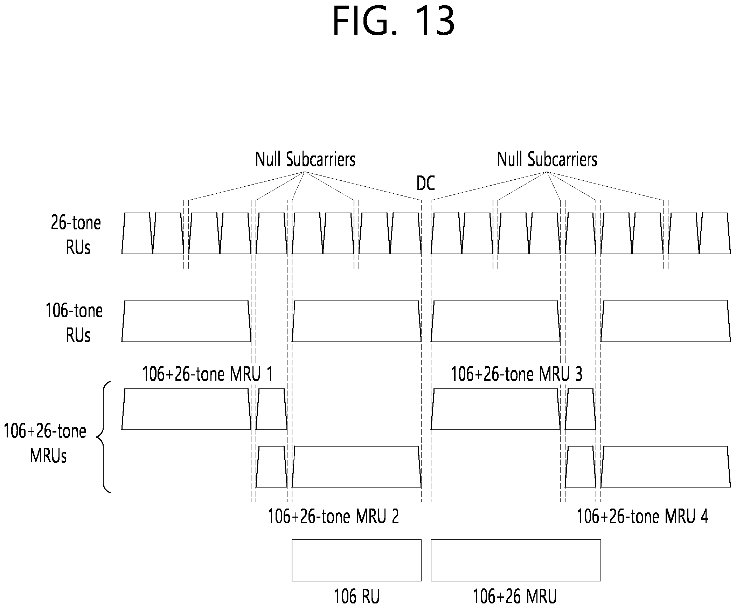

In this proposal, when combining a specific RU/MRU of 20 MHz and an adjacent RU/MRU of 20 MHz, the RU/MRU can be adjacent RUs/MRUs. For example, when combining a 106 RU within a specific 20 MHz and a 106+26 MRU within an adjacent 20 MHz, if the specific 20 MHz where the 106 RU is used is located at a low frequency and the adjacent 20 MHz where the 106+26 MRU is used is located at a high frequency, the combination can be performed using the 106 RU located on the right within the specific 20 MHz and the 106+26 MRU located on the left within the adjacent 20 MHz. Fig. 13 illustrates the corresponding case at 40 MHz.

FIG. 13 shows a combination of a 106-tone RU in a specific 20 MHz channel and a 106+26-tone MRU in an adjacent 20 MHz channel in the 40 MHz band.

Referring to FIG. 13, an STA can be allocated a combination of 106 RU of 106+26 MRU 2 and 106+26 MRU 3 within a 40 MHz band.

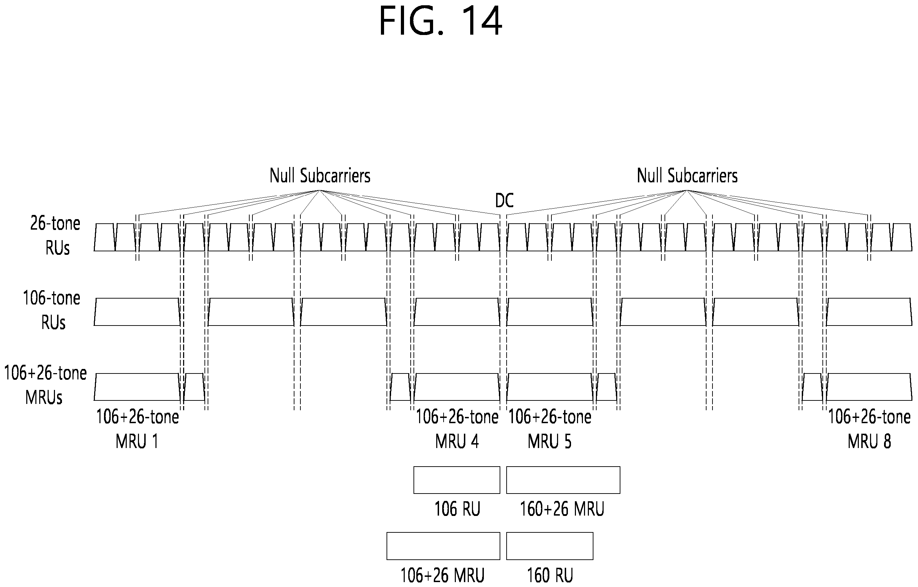

However, since the combination of 106+26 MRU is limited in the case of 80 MHz or higher, considering only the case where the combination of adjacent RU/MRU in the adjacent 20 MHz channel is considered, the combination using 106+26 MRU is only possible in the RU/MRU combination within some adjacent 20 MHz channels. For example, in the case of 80 MHz, the combination of 106+26 MRU is possible only in the case of the RU/MRU combination within the second and third 20 MHz channels, as shown in Fig. 14.

FIG. 14 shows a combination of a 106-tone RU in a specific 20 MHz channel and a 106+26-tone MRU in an adjacent 20 MHz channel in the 80 MHz band.

Referring to FIG. 14, the STA may be allocated a combination of 106 RUs of 106+26 MRU 4 and 106+26 MRU 5 within the 80MHz band, or a combination of 106 RUs of 106+26 MRU 4 and 106+26 MRU 5.

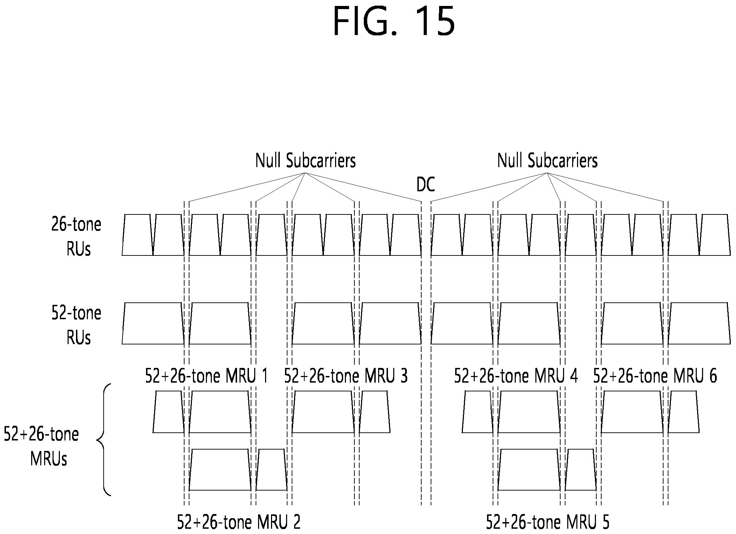

In addition, as shown in the RU combinations of 40MHz/80MHz in FIG. 15 and FIG. 16, 52+26 MRUs may be excluded from the combination proposed by the present embodiment because they are not always located at the boundary.

FIG.15 shows a combination of 52+26-tone MRUs in a 20 MHz subchannel in the 40 MHz band.

Referring to FIG. 15, an STA cannot be allocated a combination of 52+26 MRUs within a specific 20MHz subchannel in the 40MHz band and 106 RU/106+26 MRU/52+26 MRUs within an adjacent 20MHz subchannel.

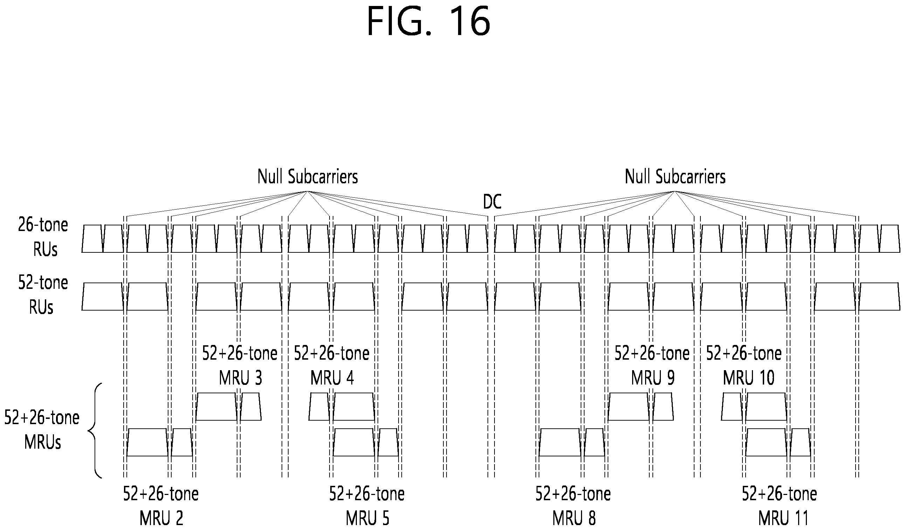

FIG. 16 shows a combination of 52+26-tone MRUs in each 80 MHz subblock in the 80 MHz, 160 MHz or 320 MHz band.

Referring to FIG. 16, an STA cannot be allocated a combination of 52+26 MRUs within each 80MHz subblock and 106 RU / 106+26 MRU / 52+26 MRU within an adjacent 20MHz subchannel.

The reason why 26 RU and 52 RU are not considered in the combination is that their size is relatively small, so there is a greater possibility that they will increase signaling overhead or scheduling complexity compared to the efficiency improvement.

Considering that the operating bandwidth of STA is 80 / 160 MHz, the MRU of this proposal can be limited to combining only within an 80 MHz or 160 MHz channel (regardless of the transmitted bandwidth). In addition, since data encoding is performed in units of 80 MHz, the combination can also be limited to combining only within an 80 MHz channel (regardless of the transmitted bandwidth).

In addition, considering the large number of DC or null subcarriers between the second and third 20 MHz channels of an 80 MHz channel, the MRUs of this proposal can be restricted to be combined only within a 40 MHz channel (regardless of the transmitted bandwidth). That is, in a specific 80 MHz channel, a specific RU/MRU combination within the second 20 MHz channel and a specific RU/MRU combination within the third 20 MHz channel can be excluded.

In summary, the New MRU proposed in this embodiment can be limited to a combination of only the RU/MRU located at the boundary within a specific 20 MHz channel (only 242 RU/106 RU/106+26 MRUs can be included) and the small RU/MRU adjacent to the RU/MRU located at the boundary within the specific 20 MHz channel (only 106 RU/106+26 MRUs can be included). The combination can be combined only within a 40 MHz channel, regardless of the transmitted bandwidth.

2) Combination of 106 RU/106+26 MRU/52+26 MRU within 20 MHz adjacent to a specific large RU/MRU

A new MRU can be proposed as follows, where '{}' means a large RU / MRU corresponding to a channel of 20 MHz or more, and '()' means a combination of RU / MRUs within a 20 MHz channel adjacent to the large RU / MRU, and the order is independent of the high and low frequencies. X can be 242 RU / 484 RU / 484+242 MRU / 996 RU / 996+484 MRU / 996+484+242 MRU / 2x996 RU / 2x996+484 MRU / 3x996 RU / 3x996+484 MRU, and considering the introduction of bandwidth exceeding 320 MHz, X can be not only 4x996 RU but also a large RU / MRU that can be newly added. The newly added large RU / MRU is not covered in this specification. The large RU/MRU described in this embodiment may be a RU or MRU having a size of 242 tones or more.

{X}+(106), {X}+(106+26), {X}+(52+26)

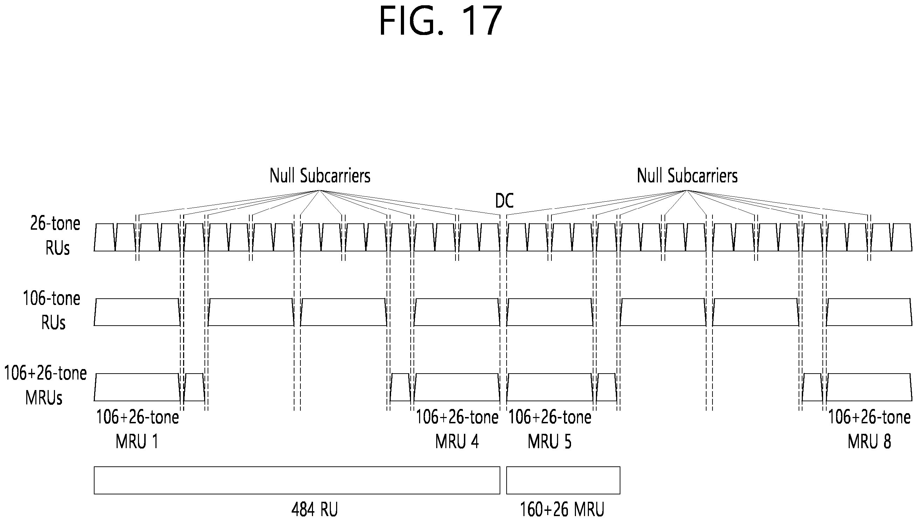

In this proposal, an adjacent RU/MRU within 20 MHz that is combined with a specific large RU/MRU can be an adjacent RU/MRU to the specific large RU/MRU. (In the case of a large MRU, there are non-contiguous MRUs, in which case, any RU within the large MRU can be combined with an adjacent RU/MRU within 20 MHz. Also, an RU/MRU within 20 MHz can be an adjacent RU/MRU to any RU of the large MRU because it is located on the boundary.) For example, when combining a specific 484 RU with an adjacent 106+26 MRU within 20 MHz, if the 484 RU is located at a low frequency and the adjacent 20 MHz where the 106+26 MRU is used is located at a high frequency, the 106+26 MRU located on the left within the adjacent 20 MHz can be used to combine with the 484 RU. FIG. 17 represents the corresponding case at 80 MHz.

FIG. 17 shows a combination of a 484-tone RU in an 80 MHz band and a 106+26-tone MRU in an adjacent 20 MHz subchannel.

Referring to FIG. 17, an STA can be allocated a combination of 484RU with a low frequency within the 80MHz band and 106+26 MRU adjacent to it.

However, in situations above 80 MHz, since the combinations of 106+26 MRUs are limited, only some combinations are possible when considering the combination of 242 RU and adjacent 106+26 MRUs. For example, at 80 MHz, only the combinations of 242 RU of the second 20 MHz channel and the third 106+26 MRU, and the combinations of 242 RU of the third 20 MHz channel and the second 106+26 MRU are possible.

Additionally, since 52+26 MRU is not always located at the boundary, it can be excluded from the combination proposed by this embodiment.

The reason why 26 RU and 52 RU are not considered in the combination is that their size is relatively small, so there is a greater possibility that they will increase signaling overhead or scheduling complexity compared to the efficiency improvement.

In addition, the combination of RU/MRU of 996 RU or more and small RU/MRU within the adjacent 20 MHz channel may result in relatively large overhead and complexity compared to the small improvement in throughput due to the relatively large size of the large RU/MRU, so such MRU combinations may be excluded.

Considering that the operating bandwidth of STA is 80/160 MHz, the MRU of this proposal can be restricted to be combined only within an 80 MHz or 160 MHz channel (regardless of the transmitted bandwidth). Also, since data encoding is performed in units of 80 MHz, it can be restricted to be combined only within an 80 MHz channel (regardless of the transmitted bandwidth). However, the case of restricting to an 80 MHz channel only applies to combinations of large RU/MRU and small RU/MRU less than 996 RU, and the case of restricting to an 160 MHz channel only applies to combinations of large RU/MRU and small RU/MRU less than 2x996 RU.

Also, considering the large number of DC or null subcarriers between the second and third 20 MHz channels of an 80 MHz channel, the proposed MRU can be restricted to be combined only within a 40 MHz channel (regardless of the transmitted bandwidth) only for RU/MRU combinations whose size is 242 RU or less. That is, in a specific 80 MHz channel, a specific RU/MRU combination within the second 20 MHz channel and a specific RU/MRU combination within the third 20 MHz channel can be excluded.

In summary, the New MRU proposed in this embodiment can be limited to a combination of only large RU/MRUs less than 996 RUs and small RUs/MRUs adjacent to the large RU/MRU (only 106 RUs/106+26 MRUs can be included) located at the boundary within the adjacent 20 MHz channel. The combination can be combined only within an 80 MHz channel regardless of the transmitted bandwidth, and in particular, the combination of only RUs/MRUs with a size of 242 RUs or less can be combined only within a 40 MHz channel.

Below is an example of this proposal.

Consider a situation where RU/MRU is allocated to STA1 and STA2 in 40 MHz bandwidth. Assume that STA2 is a 20 MHz operating STA and operates on a channel with a high frequency of 20 MHz, and that the amount of data of STA2 is relatively small compared to STA1. In this case, STA1 can be allocated a combination of 242 RUs in the low 20 MHz and 106 RUs / 106+26 MRUs / 52+26 MRUs adjacent to it in the high 20 MHz, and the remaining RUs / MRUs in the high 20 MHz can be allocated to STA2. Below, the RUs and MRUs allocated to STA1 and STA2 are listed. A / B means that RU or MRU A is the RU or MRU allocated to STA1. RU or MRU B is the RU or MRU allocated to STA2. The order of RUs or MRUs is not related to the high or low frequency.

{242}+(106) MRU / 106 RU or {242}+(106) MRU / 106+26 MRU or {242}+(106+26) MRU / 106 RU or {242}+(52+26) MRU / 106 RU or {242}+(52+26) MRU/ 106+26 MRU

Except for 52+26 MRU among RUs and MRUs combined with 242 RU, all are adjacent to 242 RU, and in {242}+(52+26) MRU, one 26 RU can be located between 242 RU and 52+26 MRU, which may not be allocated to any STA. In this case, there is a waste of resources, so the combination with 52+26 MRU may not be desirable.

Another example can be considered. Consider a situation where RU/MRU is allocated to STA1 and STA2 in 80 MHz bandwidth. Although STA1 data is more than STA2 data, it may not be good from the PPDU overhead perspective considering the channel condition and data amount for STA2 to use only 242 RU. Therefore, MRU can be allocated to STA1 and STA2 in various ways as follows. The meaning of A/B is the same as above.

{484}+(106) MRU / {242}+(106) MRU or {484}+(106+26) MRU / {242}+(106) MRU or {484}+(52+26) MRU / {242}+(106) MRU (only consider the case where the 484 RU corresponds to a low 40 MHz channel)

Except for 52+26 MRU among RUs and MRUs combined with 484 RU, all of them are adjacent to 242 RU / 484 RU, and in {484}+(52+26) MRU, due to the limited definition of 52+26 MRU at 80 MHz, one 52 RU may be located between 484 RU and 52+26 MRU, which may not be allocated to any STA. In this case, resource waste may make the combination with 52+26 MRU undesirable.

Another example can be considered as follows. Consider a situation where RU/MRU is allocated to STA1 and STA2 in 80 MHz bandwidth. STA2 is a 20 MHz operating STA and the amount of data is small to use 242 RU. In this case, RU/MRU can be allocated to STA1 and STA2 in various ways as follows. The meaning of A/B is the same as above.

{484+242}+(106) MRU / 106 MRU or {484+242}+(106) MRU / 106+26 MRU or {484+242}+(106+26) MRU / 106 MRU

When considering the 484+242 MRUs corresponding to the consecutive 40 MHz and 20 MHz channels, there is no adjacent 106+26 MRU. Therefore, the 484+242 MRU combined with the 106+26 MRU may be the 484+242 MRUs corresponding to the non-consecutive 40 MHz and 20 MHz channels. For example, the above-described 484+242 MRU may be a combination of the lowest frequency 484 RU and the highest frequency 242 RU in Fig. 17, or a combination of the lowest frequency 242 RU and the highest frequency 484 RU.

As another example, consider the following. Consider a situation where RU/MRU is allocated to STA1, STA2, and STA3 in 80 MHz bandwidth. STA2 is a 20 MHz operating STA and the amount of data is not so much as to use 242 RU. In this case, various combinations are possible as shown below, and among a/b/c, b indicates the RU/MRU allocated to the 20 MHz operating STA (STA2), and one of a and c indicates that it is allocated to STA1 and one to STA3. The order of RU or MRU is not related to the high or low frequency.

{484}+(106) / 106 / 242 or {484}+(106+26) / 106 / 242

or {242}+(106) / 106 I 484 or {242}+(106) / 106+26 / 484

There are many other situations that can be considered.

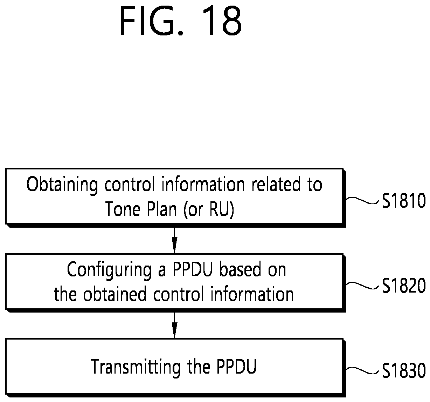

FIG. 18 is a flowchart illustrating the operation of the transmitting apparatus/device according to the present embodiment.

The example of FIG. 18 may be performed by a transmitting device (AP and/or non-AP STA).

Some of each step (or detailed sub-step to be described later) of the example of FIG. 18 may be skipped/omitted.

Through step S1810, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S1820, the transmitting device may construct/generate a PPDU based on the acquired control information. Configuring/generating the PPDU may include configuring/generating each field of the PPDU. That is, step S1820 includes configuring the EHT-SIG field including control information about the tone plan. That is, step S1820 includes configuring a field including control information (e.g., N bitmap) indicating the size/position of the RU; and/or configuring a field including an identifier of an STA receiving the RU (e.g., AID).

Also, step S1820 may include generating an STF/LTF sequence transmitted through a specific RU. The STF/LTF sequence may be generated based on a preset STF generation sequence/LTF generation sequence.

Also, step S1820 may include generating a data field (i.e., MPDU) transmitted through a specific RU.

The transmitting device may transmit the PPDU constructed through step S1820 to the receiving device based on step S1830.

While performing step S1830, the transmitting device may perform at least one of operations such as CSD, Spatial Mapping, IDFT/IFFT operation, and GI insertion.

A signal/field/sequence constructed according to the present specification may be transmitted in the form of FIG. 10.

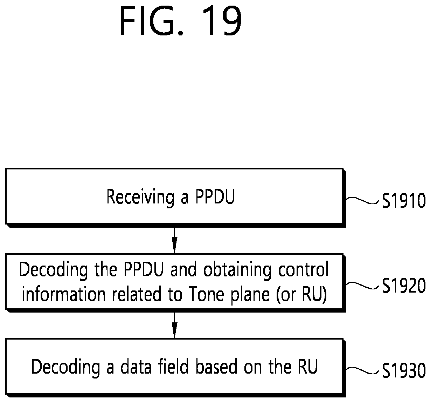

FIG. 19 is a flowchart illustrating the operation of the receiving apparatus/device according to the present embodiment.

The aforementioned PPDU may be received according to the example of FIG. 19.

The example of FIG. 19 may be performed by a receiving apparatus/device (AP and/or non-AP STA).

Some of each step (or detailed sub-step to be described later) of the example of FIG. 19 may be skipped/omitted.

The receiving device (receiving STA) may receive all or part of the PPDU through step S1910. The received signal may be in the form of FIG. 10.

A sub-step of step S1910 may be determined based on step S1830 of FIG. 18. That is, in step S1910, an operation of restoring the result of the CSD, Spatial Mapping, IDFT/IFFT operation, and GI insertion operation applied in step S1830 may be performed.

In step S1920, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S1930, the receiving device may decode the remaining part of the PPDU based on information about the tone plan (i.e., RU) acquired through step S1920. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S1930 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 19.

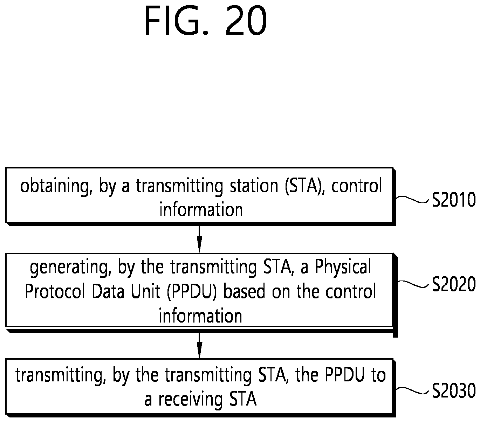

FIG. 20 is a flowchart showing a procedure in which the transmitting STA generated the PPDU based the control information related to the RU or MRU according to the present embodiment.

The example of FIG. 20 may be performed in a network environment in which a next generation WLAN system (IEEE 802.11be or EHT WLAN system) is supported. The next generation wireless LAN system is a WLAN system that is enhanced from an 802.11ax system and may, therefore, satisfy backward compatibility with the 802.11ax system.

The example of FIG. 20 is performed in a transmitting STA, and the transmitting STA may correspond to an access point (AP) STA. The receiving STA of FIG. 20 may correspond to an STA or an AP.

This embodiment proposes a method of configuring an MRU that can use a channel more efficiently based on a combination of an RU or MRU within a specific channel and an RU or MRU within an adjacent 20MHz channel.

In step S2010, a transmitting station (STA) obtains control information.

In step S2020, the transmitting STA generates a Physical Protocol Data Unit (PPDU) based on the control information.

In step S2030, the transmitting STA transmits the PPDU to a receiving STA.

The control information includes first or second information on a Resource Unit (RU) or a Multi-Resource Unit (MRU) within a bandwidth of the PPDU.

The first information includes first allocation information on a third MRU that is an aggregate of a first RU or a first MRU within a first channel and a second RU or a second MRU within a second channel. The first and second channels are adjacent 20 MHz channels.

The first RU or first MRU is a 242-tone RU, a 106-tone RU or a 106+26-tone MRU located at a boundary of the first channel adjacent to the second channel. The second RU or second MRU is a 106-tone RU or a 106+26-tone MRU located at a boundary of the second channel adjacent to the first channel.

The third MRU may be aggregated only within a 40MHz channel regardless of the bandwidth of the PPDU. For example, assuming that the first channel is a first 20MHz subchannel having a low frequency and the second channel is a second 20MHz subchannel having a high frequency, since the first and second channels are adjacent to each other, the third MRU may be obtained as a combination of RUs or MRUs within the first and second channels. That is, the third MRU may be aggregated centered on a boundary where the first channel and the second channel are adjacent.

According to the above-described embodiment, the third MRU may include a 242+106-tone MRU, a 242+106+26-tone MRU, a 106+106-tone MRU, a 106+106+26-tone MRU, a 106+26+106-tone MRU or a 106+26+106+26-tone MRU.

The second information may include second allocation information on a fourth MRU, which is an aggregate of a third RU or a third MRU in a third channel and a fourth RU or a fourth MRU in a fourth channel. The third and fourth channels may be adjacent to each other. The third channel may be a channel having a size of 20MHz or more. The fourth channel may be a 20MHz channel.

The third RU or the third MRU may be a 242-tone RU, a 484-tone RU, a 484+242-tone MRU, a 996-tone RU, a 996+484-tone MRU, a 996+484+242-tone MRU, a 2x996-tone RU, a 2x996+484-tone MRU, a 3x996-tone RU, or a 3x996+484-tone MRU, which is located at a boundary of the third channel adjacent to the fourth channel. The fourth RU or the fourth MRU may be a 106-tone RU or 106+26-tone MRU located at a boundary of the fourth channel adjacent to the third channel.

The fourth MRU may be aggregated only within an 80MHz channel regardless of the bandwidth of the PPDU, or the fourth MRU is aggregated within a 40MHz channel based on the third RU or the third MRU being a 242-tone RU.

For example, assuming that the third channel is a 40 MHz subchannel with a low frequency and the fourth channel is a 20 MHz subchannel with a high frequency, and the third and fourth channels are adjacent to each other, the fourth MRU may be obtained by a combination of RUs or MRUs within an 80 MHz channel including the third and fourth channels. However, based on the third RU or the third MRU being a 242-tone RU, the fourth MRU may be obtained by a combination of RUs or MRUs within a 20 MHz subchannel with a high frequency of the third channel and a 40 MHz channel including the fourth channel.

That is, the fourth MRU may be aggregated around the boundary where the third channel and the fourth channel are adjacent.

According to the above-described embodiment, the fourth MRU may include a 242+106-tone MRU, a 242+106+26-tone MRU, a 484+106-tone MRU, a 484+106+26-tone MRU, a 484+242+106-tone MRU, a 484+242+106+26-tone MRU, a 996+106-tone MRU, a 996+106+26-tone MRU, a 996+484+106-tone MRU, a 996+484+106+26-tone MRU, a 996+484+242+106-tone MRU, a 2x996+106+26-tone MRU, 2x996+484+106-tone MRU, 2x996+484+106+26-tone MRU, 3x996+106-tone MRU, 3x996+106+26-tone MRU, 3x996+484+106-tone MRU or 3x996+484+106+26-tone MRU.

For example, it is assumed that the receiving STA includes a first and a second STA, and that the second STA operates at 20 MHz. In addition, it is assumed that the amount of data allocated to the second STA is relatively small compared to the first STA.

Based on the first RU or the first MRU being a 242-tone RU, and the second RU or the second MRU being a 106+26-tone MRU, the first STA is assigned to an MRU (242+106+26-tone MRU) in which the 242-tone RU and the 106+26-tone MRU are aggregated, and the second STA is assigned to a 106-tone RU excluding the 106+26-tone MRU in the second channel.

According to the above-described embodiment, it becomes possible for two different STAs (the first and second STAs) to share and use the second channel (20MHz channel) within the 40MHz channel. That is, in the present embodiment, when resources are allocated to multiple STAs including STAs operating at 20MHz by considering channel conditions or the amount of data, the utilization of the channel can be improved by using a previously unused channel. As a result, it is expected that the overall throughput and efficiency of the system can be improved.

As another example, assume that the receiving STA includes a first and a second STA, and that the second STA operates at 20 MHz. In addition, assume that the amount of data allocated to the second STA is relatively small compared to the first STA (using RUs smaller than 242 RU).

Based on the third RU or the third MRU being a 484+242-tone MRU and the fourth RU or the fourth MRU being a 106-tone RU, the first STA may be assigned to an MRU (484+242+106-tone MRU) in which the 484+242-tone MRU and the 106-tone RU are aggregated, and the second STA may be assigned to a 106-tone RU or a 106+26-tone MRU excluding the 106-tone RU in the fourth channel.

As another example, it is assumed that the receiving STA includes first to third STAs, and the second STA operates at 20 MHz. In addition, it is assumed that the amount of data allocated to the second STA is relatively small compared to the first and third STAs (using RUs smaller than 242 RU). In addition, it is assumed that the bandwidth of the PPDU is 80 MHz, and includes the third and fourth channels and the fifth channel. The third channel may be a 40 MHz channel having the lowest frequency, the fourth channel may be a 20 MHz channel having the second highest frequency, and the fifth channel may be a 20 MHz channel having the highest frequency.

Based on the third RU or the third MRU being a 484-tone RU and the fourth RU or the fourth MRU being a 106-tone RU, the first STA may be assigned to an MRU (484+106-tone MRU) in which the 484-tone RU and the 106-tone RU are aggregated, the second STA may be assigned to a 106-tone RU or a 106+26-tone MRU excluding the 106-tone MRU in the fourth channel, and the third STA may be assigned to a 242-tone RU corresponding to the fifth channel.

The transmitting STA may allocate the third MRU to the receiving STA based on the first allocation information, or may allocate the fourth MRU based on the second allocation information. The receiving STA may decode the data field in the third MRU based on the first allocation information, or may decode the data field in the fourth MRU based on the second allocation information.

The 106+26 tone MRU may be a resource unit combining a 106-tone RU and a 26-tone RU, the 484+242-tone MRU may be a resource unit combining a 484-tone RU and a 242-tone RU, the 996+484-tone MRU may be a resource unit combining a 996-tone RU and a 484-tone RU, the 996+484+242-tone MRU may be a resource unit combining a 996-tone RU, a 484-tone RU and a 242-tone RU, the 2x996-tone RU may be a resource unit combining two 996-tone RUs, the 2x996+484-tone MRU may be a resource unit combining two 996-tone RUs and a 484-tone RU, the 3x996-tone RU may be a resource unit combining three 996-tone RUs, the 3x996+484-tone MRU may be a resource unit composed of three 996-tone RUs and a 484-tone RU, the 996-tone RU may be a resource unit composed of 996 tones, the 484-tone RU may be a resource unit composed of 484 tones, the 242-tone RU may be a resource unit composed of 242 tones, the 106-tone RU may be a resource unit composed of 106 tones, the 26-tone RU may be a resource unit composed of 26 tones.

The PPDU may be transmitted based on Orthogonal Frequency Division Multiple Access (OFDMA).

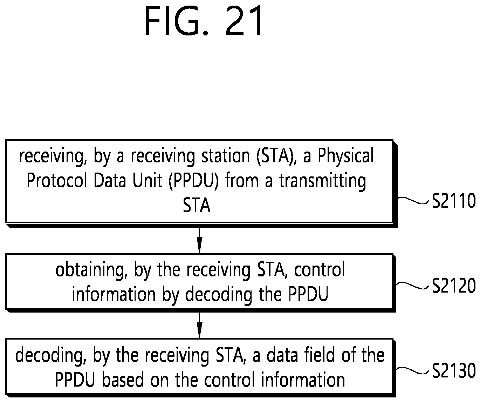

FIG. 21 is a flowchart showing a procedure in which the receiving STA receives the PPDU based the control information related to the RU or MRU according to the present embodiment.

The example of FIG. 21 may be performed in a network environment in which a next generation WLAN system (IEEE 802.11be or EHT WLAN system) is supported. The next generation wireless LAN system is a WLAN system that is enhanced from an 802.11ax system and may, therefore, satisfy backward compatibility with the 802.11ax system.

The example of FIG. 21 is performed in a receiving STA, and the receiving STA may correspond to a station (STA) or an access point (AP). The transmitting STA of FIG. 21 may correspond to an AP or a STA.

This embodiment proposes a method of configuring an MRU that can use a channel more efficiently based on a combination of an RU or MRU within a specific channel and an RU or MRU within an adjacent 20MHz channel.

In step S2110, a receiving station (STA) receives a Physical Protocol Data Unit (PPDU) from a transmitting STA.

In step S2120, the receiving STA obtains control information by decoding the PPDU.

In step 2130, the receiving STA decodes a data field of the PPDU based on the control information.

The control information includes first or second information on a Resource Unit (RU) or a Multi-Resource Unit (MRU) within a bandwidth of the PPDU.

The first information includes first allocation information on a third MRU that is an aggregate of a first RU or a first MRU within a first channel and a second RU or a second MRU within a second channel. The first and second channels are adjacent 20 MHz channels.

The first RU or first MRU is a 242-tone RU, a 106-tone RU or a 106+26-tone MRU located at a boundary of the first channel adjacent to the second channel. The second RU or second MRU is a 106-tone RU or a 106+26-tone MRU located at a boundary of the second channel adjacent to the first channel.

The third MRU may be aggregated only within a 40MHz channel regardless of the bandwidth of the PPDU. For example, assuming that the first channel is a first 20MHz subchannel having a low frequency and the second channel is a second 20MHz subchannel having a high frequency, since the first and second channels are adjacent to each other, the third MRU may be obtained as a combination of RUs or MRUs within the first and second channels. That is, the third MRU may be aggregated centered on a boundary where the first channel and the second channel are adjacent.

According to the above-described embodiment, the third MRU may include a 242+106-tone MRU, a 242+106+26-tone MRU, a 106+106-tone MRU, a 106+106+26-tone MRU, a 106+26+106-tone MRU or a 106+26+106+26-tone MRU.

The second information may include second allocation information on a fourth MRU, which is an aggregate of a third RU or a third MRU in a third channel and a fourth RU or a fourth MRU in a fourth channel. The third and fourth channels may be adjacent to each other. The third channel may be a channel having a size of 20MHz or more. The fourth channel may be a 20MHz channel.

The third RU or the third MRU may be a 242-tone RU, a 484-tone RU, a 484+242-tone MRU, a 996-tone RU, a 996+484-tone MRU, a 996+484+242-tone MRU, a 2x996-tone RU, a 2x996+484-tone MRU, a 3x996-tone RU, or a 3x996+484-tone MRU, which is located at a boundary of the third channel adjacent to the fourth channel. The fourth RU or the fourth MRU may be a 106-tone RU or 106+26-tone MRU located at a boundary of the fourth channel adjacent to the third channel.

The fourth MRU may be aggregated only within an 80MHz channel regardless of the bandwidth of the PPDU, or the fourth MRU is aggregated within a 40MHz channel based on the third RU or the third MRU being a 242-tone RU.

For example, assuming that the third channel is a 40 MHz subchannel with a low frequency and the fourth channel is a 20 MHz subchannel with a high frequency, and the third and fourth channels are adjacent to each other, the fourth MRU may be obtained by a combination of RUs or MRUs within an 80 MHz channel including the third and fourth channels. However, based on the third RU or the third MRU being a 242-tone RU, the fourth MRU may be obtained by a combination of RUs or MRUs within a 20 MHz subchannel with a high frequency of the third channel and a 40 MHz channel including the fourth channel.

That is, the fourth MRU may be aggregated around the boundary where the third channel and the fourth channel are adjacent.

According to the above-described embodiment, the fourth MRU may include a 242+106-tone MRU, a 242+106+26-tone MRU, a 484+106-tone MRU, a 484+106+26-tone MRU, a 484+242+106-tone MRU, a 484+242+106+26-tone MRU, a 996+106-tone MRU, a 996+106+26-tone MRU, a 996+484+106-tone MRU, a 996+484+106+26-tone MRU, a 996+484+242+106-tone MRU, a 2x996+106+26-tone MRU, 2x996+484+106-tone MRU, 2x996+484+106+26-tone MRU, 3x996+106-tone MRU, 3x996+106+26-tone MRU, 3x996+484+106-tone MRU or 3x996+484+106+26-tone MRU.

For example, it is assumed that the receiving STA includes a first and a second STA, and that the second STA operates at 20 MHz. In addition, it is assumed that the amount of data allocated to the second STA is relatively small compared to the first STA.

Based on the first RU or the first MRU being a 242-tone RU, and the second RU or the second MRU being a 106+26-tone MRU, the first STA is assigned to an MRU (242+106+26-tone MRU) in which the 242-tone RU and the 106+26-tone MRU are aggregated, and the second STA is assigned to a 106-tone RU excluding the 106+26-tone MRU in the second channel.

According to the above-described embodiment, it becomes possible for two different STAs (the first and second STAs) to share and use the second channel (20MHz channel) within the 40MHz channel. That is, in the present embodiment, when resources are allocated to multiple STAs including STAs operating at 20MHz by considering channel conditions or the amount of data, the utilization of the channel can be improved by using a previously unused channel. As a result, it is expected that the overall throughput and efficiency of the system can be improved.

As another example, assume that the receiving STA includes a first and a second STA, and that the second STA operates at 20 MHz. In addition, assume that the amount of data allocated to the second STA is relatively small compared to the first STA (using RUs smaller than 242 RU).

Based on the third RU or the third MRU being a 484+242-tone MRU and the fourth RU or the fourth MRU being a 106-tone RU, the first STA may be assigned to an MRU (484+242+106-tone MRU) in which the 484+242-tone MRU and the 106-tone RU are aggregated, and the second STA may be assigned to a 106-tone RU or a 106+26-tone MRU excluding the 106-tone RU in the fourth channel.

As another example, it is assumed that the receiving STA includes first to third STAs, and the second STA operates at 20 MHz. In addition, it is assumed that the amount of data allocated to the second STA is relatively small compared to the first and third STAs (using RUs smaller than 242 RU). In addition, it is assumed that the bandwidth of the PPDU is 80 MHz, and includes the third and fourth channels and the fifth channel. The third channel may be a 40 MHz channel having the lowest frequency, the fourth channel may be a 20 MHz channel having the second highest frequency, and the fifth channel may be a 20 MHz channel having the highest frequency.

Based on the third RU or the third MRU being a 484-tone RU and the fourth RU or the fourth MRU being a 106-tone RU, the first STA may be assigned to an MRU (484+106-tone MRU) in which the 484-tone RU and the 106-tone RU are aggregated, the second STA may be assigned to a 106-tone RU or a 106+26-tone MRU excluding the 106-tone MRU in the fourth channel, and the third STA may be assigned to a 242-tone RU corresponding to the fifth channel.

The transmitting STA may allocate the third MRU to the receiving STA based on the first allocation information, or may allocate the fourth MRU based on the second allocation information. The receiving STA may decode the data field in the third MRU based on the first allocation information, or may decode the data field in the fourth MRU based on the second allocation information.

The 106+26 tone MRU may be a resource unit combining a 106-tone RU and a 26-tone RU, the 484+242-tone MRU may be a resource unit combining a 484-tone RU and a 242-tone RU, the 996+484-tone MRU may be a resource unit combining a 996-tone RU and a 484-tone RU, the 996+484+242-tone MRU may be a resource unit combining a 996-tone RU, a 484-tone RU and a 242-tone RU, the 2x996-tone RU may be a resource unit combining two 996-tone RUs, the 2x996+484-tone MRU may be a resource unit combining two 996-tone RUs and a 484-tone RU, the 3x996-tone RU may be a resource unit combining three 996-tone RUs, the 3x996+484-tone MRU may be a resource unit composed of three 996-tone RUs and a 484-tone RU, the 996-tone RU may be a resource unit composed of 996 tones, the 484-tone RU may be a resource unit composed of 484 tones, the 242-tone RU may be a resource unit composed of 242 tones, the 106-tone RU may be a resource unit composed of 106 tones, the 26-tone RU may be a resource unit composed of 26 tones.

The PPDU may be transmitted based on Orthogonal Frequency Division Multiple Access (OFDMA).

### 3. Device configuration

The technical features of the present disclosure may be applied to various devices and methods. For example, the technical features of the present disclosure may be performed/supported through the device(s) of FIG. 1 and/or FIG. 11. For example, the technical features of the present disclosure may be applied to only part of FIG. 1 and/or FIG. 11. For example, the technical features of the present disclosure may be implemented based on the processing chip(s) 114 and 124 of FIG. 1, or implemented based on the processor(s) 111 and 121 and the memory(s) 112 and 122, or implemented based on the processor 610 and the memory 620 of FIG. 11. For example, the device according to the present disclosure receives a Physical Protocol Data Unit (PPDU) from a transmitting station (STA); obtains control information by decoding the PPDU; and decodes a data field of the PPDU based on the control information.

The technical features of the present disclosure may be implemented based on a computer readable medium (CRM). For example, a CRM according to the present disclosure is at least one computer readable medium including instructions designed to be executed by at least one processor.

The CRM may store instructions that perform operations including receiving a Physical Protocol Data Unit (PPDU) from a transmitting station (STA); obtaining control information by decoding the PPDU; and decoding a data field of the PPDU based on the control information. At least one processor may execute the instructions stored in the CRM according to the present disclosure. At least one processor related to the CRM of the present disclosure may be the processor 111, 121 of FIG. 1, the processing chip 114, 124 of FIG. 1, or the processor 610 of FIG. 11. Meanwhile, the CRM of the present disclosure may be the memory 112, 122 of FIG. 1, the memory 620 of FIG. 11, or a separate external memory/storage medium/disk.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

## Claims

1. A method in a wireless local area network (WLAN) system, the method comprising:
receiving, by a receiving station (STA), a Physical Protocol Data Unit (PPDU) from a transmitting STA;
obtaining, by the receiving STA, control information by decoding the PPDU; and
decoding, by the receiving STA, a data field of the PPDU based on the control information,
wherein the control information includes first or second information on a Resource Unit (RU) or a Multi-Resource Unit (MRU) within a bandwidth of the PPDU,
wherein the first information includes first allocation information on a third MRU that is an aggregate of a first RU or a first MRU within a first channel and a second RU or a second MRU within a second channel,
wherein the first and second channels are adjacent 20 MHz channels,
wherein the first RU or first MRU is a 242-tone RU, a 106-tone RU or a 106+26-tone MRU located at a boundary of the first channel adjacent to the second channel, and
wherein the second RU or second MRU is a 106-tone RU or a 106+26-tone MRU located at a boundary of the second channel adjacent to the first channel.

2. The method of claim 1, wherein the second information includes second allocation information on a fourth MRU, which is an aggregate of a third RU or a third MRU in a third channel and a fourth RU or a fourth MRU in a fourth channel,
wherein the third and fourth channels are adjacent to each other,
wherein the third channel is a channel having a size of 20MHz or more,
wherein the fourth channel is a 20MHz channel,
wherein the third RU or the third MRU is a 242-tone RU, a 484-tone RU, a 484+242-tone MRU, a 996-tone RU, a 996+484-tone MRU, a 996+484+242-tone MRU, a 2x996-tone RU, a 2x996+484-tone MRU, a 3x996-tone RU, or a 3x996+484-tone MRU, which is located at a boundary of the third channel adjacent to the fourth channel, and
wherein the fourth RU or the fourth MRU is a 106-tone RU or 106+26-tone MRU located at a boundary of the fourth channel adjacent to the third channel.

3. The method of claim 2, wherein the third MRU is aggregated only within a 40MHz channel regardless of the bandwidth of the PPDU,
wherein the fourth MRU is aggregated only within an 80MHz channel regardless of the bandwidth of the PPDU, or the fourth MRU is aggregated within a 40MHz channel based on the third RU or the third MRU being a 242-tone RU.

4. The method of claim 1, wherein based on the receiving STA including first and second STAs, and the second STA operating at 20MHz, and the first RU or the first MRU being a 242-tone RU, and the second RU or the second MRU being a 106+26-tone MRU, the first STA is assigned to an MRU in which the 242-tone RU and the 106+26-tone MRU are aggregated, and the second STA is assigned to a 106-tone RU excluding the 106+26-tone MRU in the second channel.

5. The method of claim 2, further comprising:
decoding, by the receiving STA, the data field in the third MRU based on the first allocation information or decoding, by the receiving STA, the data field in the fourth MRU based on the second allocation information.

6. The method of claim 2, wherein the 106+26 tone MRU is a resource unit combining a 106-tone RU and a 26-tone RU,
wherein the 484+242-tone MRU is a resource unit combining a 484-tone RU and a 242-tone RU,
wherein the 996+484-tone MRU is a resource unit combining a 996-tone RU and a 484-tone RU,
wherein the 996+484+242-tone MRU is a resource unit combining a 996-tone RU, a 484-tone RU and a 242-tone RU,
wherein the 2x996-tone RU is a resource unit combining two 996-tone RUs,
wherein the 2x996+484-tone MRU is a resource unit combining two 996-tone RUs and a 484-tone RU,
wherein the 3x996-tone RU is a resource unit combining three 996-tone RUs,
wherein the 3x996+484-tone MRU is a resource unit composed of three 996-tone RUs and a 484-tone RU,
wherein the 996-tone RU is a resource unit composed of 996 tones,
wherein the 484-tone RU is a resource unit composed of 484 tones,
wherein the 242-tone RU is a resource unit composed of 242 tones,
wherein the 106-tone RU is a resource unit composed of 106 tones,
wherein the 26-tone RU is a resource unit composed of 26 tones.

7. The method of claim 1, wherein the PPDU is transmitted based on Orthogonal Frequency Division Multiple Access (OFDMA).

8. A receiving station (STA) in a wireless local area network (WLAN) system, the receiving STA comprising:
a memory;
a transceiver; and
a processor being operatively connected to the memory and the transceiver,
wherein the processor is configured to:
receive a Physical Protocol Data Unit (PPDU) from a transmitting STA;
obtain control information by decoding the PPDU; and
decode a data field of the PPDU based on the control information,
wherein the control information includes first or second information on a Resource Unit (RU) or a Multi-Resource Unit (MRU) within a bandwidth of the PPDU,
wherein the first information includes first allocation information on a third MRU that is an aggregate of a first RU or a first MRU within a first channel and a second RU or a second MRU within a second channel,
wherein the first and second channels are adjacent 20 MHz channels,
wherein the first RU or first MRU is a 242-tone RU, a 106-tone RU or a 106+26-tone MRU located at a boundary of the first channel adjacent to the second channel, and
wherein the second RU or second MRU is a 106-tone RU or a 106+26-tone MRU located at a boundary of the second channel adjacent to the first channel.

9. A method in a wireless local area network (WLAN) system, the method comprising:
obtaining, by a transmitting station (STA), control information;
generating, by the transmitting STA, a Physical Protocol Data Unit (PPDU) based on the control information; and
transmitting, by the transmitting STA, the PPDU to a receiving STA,
wherein the control information includes first or second information on a Resource Unit (RU) or a Multi-Resource Unit (MRU) within a bandwidth of the PPDU,
wherein the first information includes first allocation information on a third MRU that is an aggregate of a first RU or a first MRU within a first channel and a second RU or a second MRU within a second channel,
wherein the first and second channels are adjacent 20 MHz channels,
wherein the first RU or first MRU is a 242-tone RU, a 106-tone RU or a 106+26-tone MRU located at a boundary of the first channel adjacent to the second channel, and
wherein the second RU or second MRU is a 106-tone RU or a 106+26-tone MRU located at a boundary of the second channel adjacent to the first channel.

10. The method of claim 9, wherein the second information includes second allocation information on a fourth MRU, which is an aggregate of a third RU or a third MRU in a third channel and a fourth RU or a fourth MRU in a fourth channel,
wherein the third and fourth channels are adjacent to each other,
wherein the third channel is a channel having a size of 20MHz or more,
wherein the fourth channel is a 20MHz channel,
wherein the third RU or the third MRU is a 242-tone RU, a 484-tone RU, a 484+242-tone MRU, a 996-tone RU, a 996+484-tone MRU, a 996+484+242-tone MRU, a 2x996-tone RU, a 2x996+484-tone MRU, a 3x996-tone RU, or a 3x996+484-tone MRU, which is located at a boundary of the third channel adjacent to the fourth channel, and
wherein the fourth RU or the fourth MRU is a 106-tone RU or 106+26-tone MRU located at a boundary of the fourth channel adjacent to the third channel.

11. The method of claim 10, wherein the third MRU is aggregated only within a 40MHz channel regardless of the bandwidth of the PPDU,
wherein the fourth MRU is aggregated only within an 80MHz channel regardless of the bandwidth of the PPDU, or the fourth MRU is aggregated within a 40MHz channel based on the third RU or the third MRU being a 242-tone RU.

12. The method of claim 9, wherein based on the receiving STA including first and second STAs, and the second STA operating at 20MHz, and the first RU or the first MRU being a 242-tone RU, and the second RU or the second MRU being a 106+26-tone MRU, the first STA is assigned to an MRU in which the 242-tone RU and the 106+26-tone MRU are aggregated, and the second STA is assigned to a 106-tone RU excluding the 106+26-tone MRU in the second channel.

13. The method of claim 10, further comprising:
allocating, by the transmitting STA, the third MRU based on the first allocation information or allocating, by the transmitting STA, the fourth MRU based on the second allocation information.

14. The method of claim 10, wherein the 106+26 tone MRU is a resource unit combining a 106-tone RU and a 26-tone RU,
wherein the 484+242-tone MRU is a resource unit combining a 484-tone RU and a 242-tone RU,
wherein the 996+484-tone MRU is a resource unit combining a 996-tone RU and a 484-tone RU,
wherein the 996+484+242-tone MRU is a resource unit combining a 996-tone RU, a 484-tone RU and a 242-tone RU,
wherein the 2x996-tone RU is a resource unit combining two 996-tone RUs,
wherein the 2x996+484-tone MRU is a resource unit combining two 996-tone RUs and a 484-tone RU,
wherein the 3x996-tone RU is a resource unit combining three 996-tone RUs,
wherein the 3x996+484-tone MRU is a resource unit composed of three 996-tone RUs and a 484-tone RU,
wherein the 996-tone RU is a resource unit composed of 996 tones,
wherein the 484-tone RU is a resource unit composed of 484 tones,
wherein the 242-tone RU is a resource unit composed of 242 tones,
wherein the 106-tone RU is a resource unit composed of 106 tones,
wherein the 26-tone RU is a resource unit composed of 26 tones.

15. The method of claim 9, wherein the PPDU is transmitted based on Orthogonal Frequency Division Multiple Access (OFDMA).

16. A transmitting station (STA) in a wireless local area network (WLAN) system, the transmitting STA comprising:
a memory;
a transceiver; and
a processor being operatively connected to the memory and the transceiver,
wherein the processor is configured to:
obtain control information;
generate a Physical Protocol Data Unit (PPDU) based on the control information; and
transmit the PPDU to a receiving STA,
wherein the control information includes first or second information on a Resource Unit (RU) or a Multi-Resource Unit (MRU) within a bandwidth of the PPDU,
wherein the first information includes first allocation information on a third MRU that is an aggregate of a first RU or a first MRU within a first channel and a second RU or a second MRU within a second channel,
wherein the first and second channels are adjacent 20 MHz channels,
wherein the first RU or first MRU is a 242-tone RU, a 106-tone RU or a 106+26-tone MRU located at a boundary of the first channel adjacent to the second channel, and
wherein the second RU or second MRU is a 106-tone RU or a 106+26-tone MRU located at a boundary of the second channel adjacent to the first channel.

17. A computer readable medium including an instruction being executed by at least one processor and performing a method comprising the steps of:
receiving a Physical Protocol Data Unit (PPDU) from a transmitting station (STA);
obtaining control information by decoding the PPDU; and
decoding a data field of the PPDU based on the control information,
wherein the control information includes first or second information on a Resource Unit (RU) or a Multi-Resource Unit (MRU) within a bandwidth of the PPDU,
wherein the first information includes first allocation information on a third MRU that is an aggregate of a first RU or a first MRU within a first channel and a second RU or a second MRU within a second channel,
wherein the first and second channels are adjacent 20 MHz channels,
wherein the first RU or first MRU is a 242-tone RU, a 106-tone RU or a 106+26-tone MRU located at a boundary of the first channel adjacent to the second channel, and
wherein the second RU or second MRU is a 106-tone RU or a 106+26-tone MRU located at a boundary of the second channel adjacent to the first channel.

18. A device in a wireless local area network (WLAN) system, the device comprising:
a memory; and
a processor being operatively connected to the memory,
wherein the processor is configured to:
receive a Physical Protocol Data Unit (PPDU) from a transmitting station (STA);
obtain control information by decoding the PPDU; and
decode a data field of the PPDU based on the control information,
wherein the control information includes first or second information on a Resource Unit (RU) or a Multi-Resource Unit (MRU) within a bandwidth of the PPDU,
wherein the first information includes first allocation information on a third MRU that is an aggregate of a first RU or a first MRU within a first channel and a second RU or a second MRU within a second channel,
wherein the first and second channels are adjacent 20 MHz channels,
wherein the first RU or first MRU is a 242-tone RU, a 106-tone RU or a 106+26-tone MRU located at a boundary of the first channel adjacent to the second channel, and
wherein the second RU or second MRU is a 106-tone RU or a 106+26-tone MRU located at a boundary of the second channel adjacent to the first channel.
